# EUROPEAN PATENT APPLICATION

(11) **EP 2 375 386 A2**
(43) Date of publication of application: **12.10.2011**
(21) Application number: 11163909.2
(22) Date of filing: 09.07.2001
(51) Int. Cl.: G07F 17/12, G06Q 10/00

(54) **System and method for facilitating receipt and collection of goods ordered from online retailers**

(30) Priority: 10.07.2000 US 217222 P
(62) Divisional of application: 01949811.2
(71) Applicant: ByBox Holdings Limited, Oxfordshire OX12 9FA (GB)
(72) Inventor: Miller, Stuart, Wantage, Oxfordshire OX12 9FA (GB); Huxter, Stephen, Wantage, Oxfordshire OX12 9FA (GB)
(74) Representative: Harrison, Paul Richard

(57) **Abstract**

A package may be ordered online and delivered to a customer via a network of automated collection points (ACPs), each comprising a plurality of lockers controlled by a local microcontroller and having a user interface comprising a keypad, barcode reader, and other input means. The ACPs are controlled by a remote computing system which generates a package ID when an order is received, for example from an online retailer, the order optionally including a tracking number. A locker in a selected one of the ACPs is opened to receive the delivery when at least one of the package ID and the tracking number and, optionally, a delivery company ID is received at the interface. Preferably the central computing system communicates asynchronously with the ACPs so that each ACP functions independently if communication is interrupted. A collection code may be generated and transmitted to the customer, and the locker is opened to allow collection of the package when at least the collection code and, optionally, a customer PIN is received at the interface.

## Description

### FIELD OF THE INVENTION

This invention relates to the field of e-commerce. In particular, the invention relates to network systems for facilitating the delivery of goods ordered from online retailers.

### Description of the Related Art

Prior to the advent of web-based retailing, customers have typically purchased goods through store-based retailing or by contacting a vendor via telephone or mail. They may go to a retail store and conduct the purchase through a sales assistant store-based retailing, or conduct the purchase over the telephone by calling the vendor directly - this is usually in response to seeing the product in a vendor's catalog or seeing an advertisement for the product on the television, radio or other medium this is called catalog-based retailing.

Recently, a third approach to retailing has evolved: buying goods over the internet. Customers select their goods from the choice available on a vendor's web page. Payment is conducted typically with a credit card, which is authorized at the point of purchase. This retail approach is referred to as "etailing"; vendors using the etailing model are referred to as "etailers".

Etailing has a number of advantages over both store-based retailing and catalog-based retailing. However, a key challenge for etailers is getting the goods to the customer in a way that is cheap and convenient. Catalog-based retailers have always faced a similar challenge, which is one of the main reasons why the growth of catalog-based retailing has been curtailed. So if etailers are to fulfill their potential, they need to address the problems with the current delivery infrastructure.

There are two problem areas with the current delivery infrastructure: cost and convenience. Each of these problems will now be discussed.

Delivering individual packages to individual customer's homes is an inefficient process compared to delivering whole batches of products to retail stores. This inefficiency is compounded further by the fact that customers are often not in to receive the delivery. Understandably, it is difficult for delivery companies to give a specific time when a customer's package will be delivered in fact, they *could* give specific times but this would make the system even more inefficient and therefore increase the cost even further. But it is equally understandable that customers are unwilling to wait in for a vaguely-specified time period often spanning several days to take receipt of their package.

The result is that the delivery company either leaves the parcel outside the customer's home which is clearly a security risk as it invites theft, or leaves a note explaining that they tried to deliver the package but the customer was not in; the delivery company will either try to deliver the package again or will ask the customer to collect it from the delivery company's depot between certain times which is inconvenient for the customer and inefficient for the delivery company.

In summary, the current process is inconvenient and inefficient. It is inconvenient for customers because they either have to try to wait in for the delivery, which could mean waiting in for several days, or go to the delivery depot at a certain time. It is inefficient for delivery companies because delivering single packages to individual customers' homes is more expensive than delivering multiple packages to retail stores, and because customers are often not in to receive their deliveries. The delivery companies' inefficiencies result in increased costs, which result in increased delivery fees. This limits further the appeal to customers of buying goods from an etailer.

Some customers have responded to this situation by arranging for goods purchased from etailers to be delivered to their employer's office. This approach has a number of problems, probably the most pertinent of which is that employers' office systems are not equipped to cope with handling their employees' shopping. Consequently, employers are becoming increasingly reluctant to allow their employees to deliver personal shopping to their place of work.

One object of this invention is to design a method and apparatus which addresses the customer inconvenience of having to wait at home to accept etailer deliveries.

Another object of this invention is to design a method and apparatus which addresses the inefficiency caused by customers not being at home to receive their goods.

A further object of this invention is to design a method and apparatus which addresses the inefficiency caused by delivering packages to individual customers' homes.

Another object of this invention is to design a method and apparatus that can be deployed rapidly. In order for this invention to be rapidly deployable, it must have a very high level of automation and be very simple to use both for delivery personnel and customers. If the system is too labour-intensive then its deployment is likely to be restricted both by the availability of suitable personnel and the time taken to train them.

Yet another object of this invention is to design a method and apparatus that can be incorporated easily into employers' offices, thereby allowing employees to have their goods delivered to their place of work without introducing a burden on their employer's office systems.

Another object of this invention is to design a method and apparatus on an architecture that can be further enhanced without a fundamental re-build to provide a drop-off point for returning unwanted goods back to etailers.

A further object of this invention is to design a method and apparatus that will allow customers to specify a reminder for themselves regarding the contents of the package. This reminder will be used when the customer is informed that the package has arrived, thereby enabling the customer to determine how urgent it is for them to collect their package.

Yet another object of this invention is to design the method and apparatus such that it can be used for advertising to customers. Furthermore, the management of the customer data will enable this advertising to be targeted at customers to whom it might be most appropriate.

Another object of this invention is to design a method and apparatus that facilitates a multitude of payment options. Payment can be made to and from each of the participants in the system. These participants are: customers, etailers, delivery companies, and hosts the hosts are the organizations on whose property the apparatus will be located.

Other objects of this invention will be apparent from the following description.

### SUMMARY OF THE INVENTION

The invention provides a method and apparatus to implement and operate a network of automated collection points, or ACPs. The automated collection points facilitate the delivery of goods to a customer. In particular, the invention allows customers, delivery agents, or retailers to arrange for the delivery of goods ordered from a retailer to an automated collection point which can be accessed by a customer.

An automated collection point comprises a bank of electronically-operated lockers. The lockers may vary in size, and may be positioned indoors or outdoors. The ACP may include different type of interfaces, such as barcode readers, smart card readers, biometric scanners, or keypads.

The automated collection point is connected via a network medium to a collection of one or more servers referred to as a Locker Management System. A Locker Management System (LMS) may control two or more automated collection points. These automated collection points may be located at separate geographical locations.

In embodiments of the invention, rather than specifying home or work as the ship-to address, customers or etailers may arrange for goods to be shipped to a local ACP. In some embodiments, each package is assigned a unique numeric ID. When a package is delivered to an ACP site, it is identified to an interface on the ACP by its package ID. In some embodiments, the package ID may be embedded in the ACP site address on the ship-to label on the package. In some embodiments, the package ID may be encoded as a bar code on a label on the package-this bar code may be scanned on a bar code scanning interface coupled to the automated collection point. In other embodiments, the package ID may be transmitted wirelessly to a detector coupled to the automated collection point In yet another embodiment, the package ID may be typed into a keyboard in communication with the automated collection point. Upon validating the package ID, the automated collection point will open to permit access, so that the package may be placed into an appropriately-sized secure locker.

In embodiments of the invention, upon receipt of the package by the automated collection point, the customer will automatically be sent a message containing notification of the delivery. The message may include a numeric code for opening the locker. In embodiments of the invention, this code will only work when used in conjunction with a pre-determined customer PIN.

In embodiments of the invention, the customer will come to the ACP site to collect their goods. In alternative embodiments, the ACP may be affixed to the customer's residence. In embodiments of the invention, the ACP interface may prompt the customer to enter their collection code followed by their PIN. The collection code and PIN will be validated by the ACP site and the server computers used to manage the network of ACPs. If the validation is successful, the locker containing the customer's goods will open.

### BRIEF DESCRIPTION OF THE FIGURES

Fig. 1 is an entity-relationship diagram illustrating process employed for arranging the delivery of goods purchased from an e-tailer according to embodiments of the invention.
Fig. 2 illustrates a network architecture for a central server used to arrange the delivery of commercial goods purchased from e-tailers in embodiments of the invention.
Fig. 3 illustrates an client-side architecture used by e-tailers to interface with the central server according to embodiments of the invention.
Fig. 4 schematically illustrates client interfaces used by customers to access the central server according to embodiments of the invention.
Fig 5 illustrates a user interface for an automated collection point used in an embodiment of the invention.
Fig. 6 illustrates a client interface used by delivery companies to access the central server in embodiments of the invention.
Fig. 7 illustrates a client interface used by hosts of the automated collection points to access the central server according to embodiments of the invention.
Fig. 8 is a flowchart for a customer registration process used in embodiments of the invention.
Fig. 9, 9a, includes a flowchart for a process for scheduling the delivery of goods according to embodiments of the invention.
Fig. 10, 10a, 10b includes flowcharts illustrating processes for delivering goods to an automated collection point according to embodiments of the invention.
Fig. 11, 11 a illustrates flowcharts for processes involved in collecting goods.
Fig. 12, 12a includes a flowchart for a collection expiry process used in embodiments of the invention.
Fig. 13, 14 illustrates a partner settlement procedure according to embodiments of the invention.

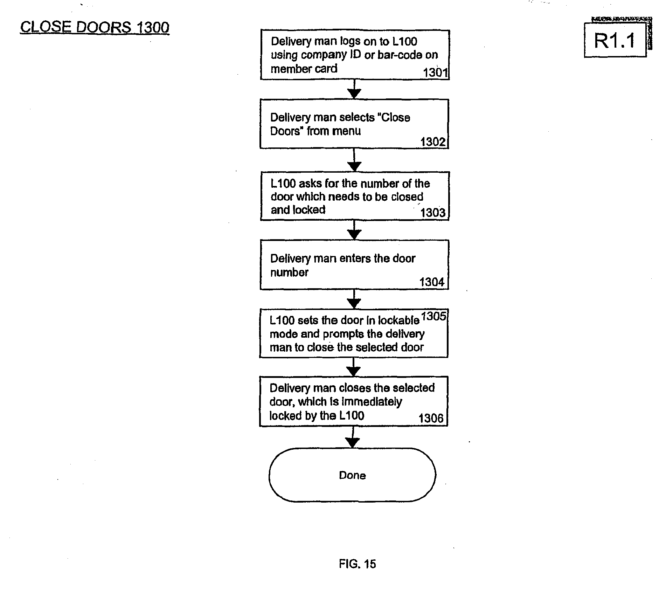

Fig. 15 illustrates a process for automated closing of the door of an automated collection point according to embodiments of the invention.
Fig. 16 illustrates a process for delivery company registration with the central server according to embodiments of the invention.

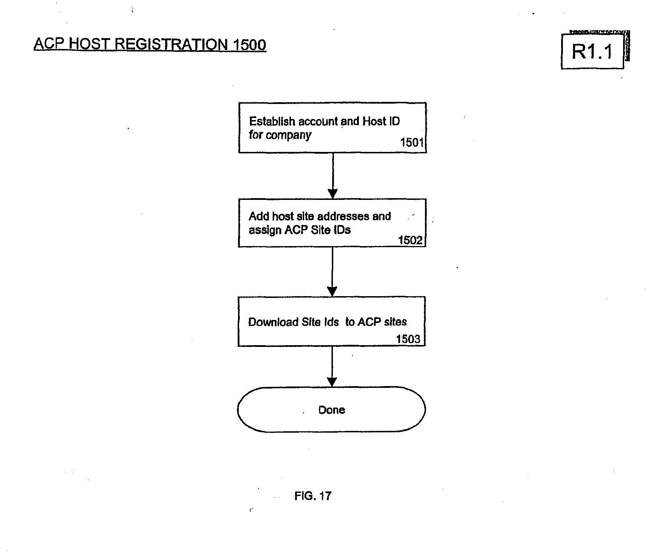

Fig. 17 illustrates a process for registering a host for an automated collection point according to embodiments of the invention.

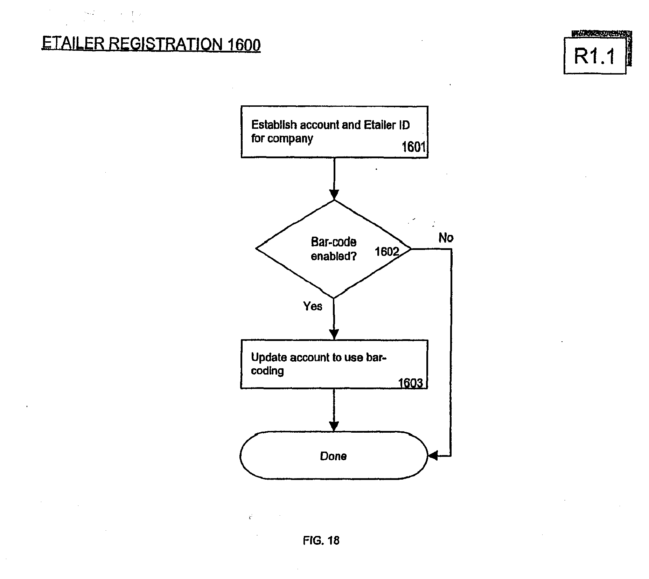

Fig. 18 illustrates a process for registering e-tailers with the central server according to embodiments of the invention.

### DETAILED DESCRIPTION

### A. System Architecture

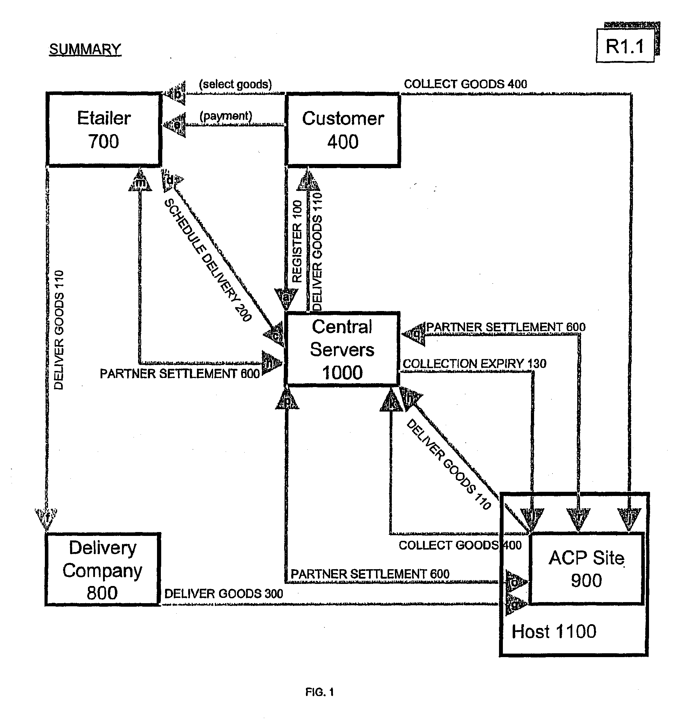

Embodiments of the invention include a computer network architecture for a locker management system used to operate one or more automated collection points. Each of the automated collection points comprises one or more lockers located at a site. The automated collection points provide an interface for validating the delivery of goods to the site. The processes employed in delivering goods to customers are schematically illustrated in Fig. 1. Each of the automated collection points is also coupled to the locker management system, which enables validation of packages arriving at the automated collection points.

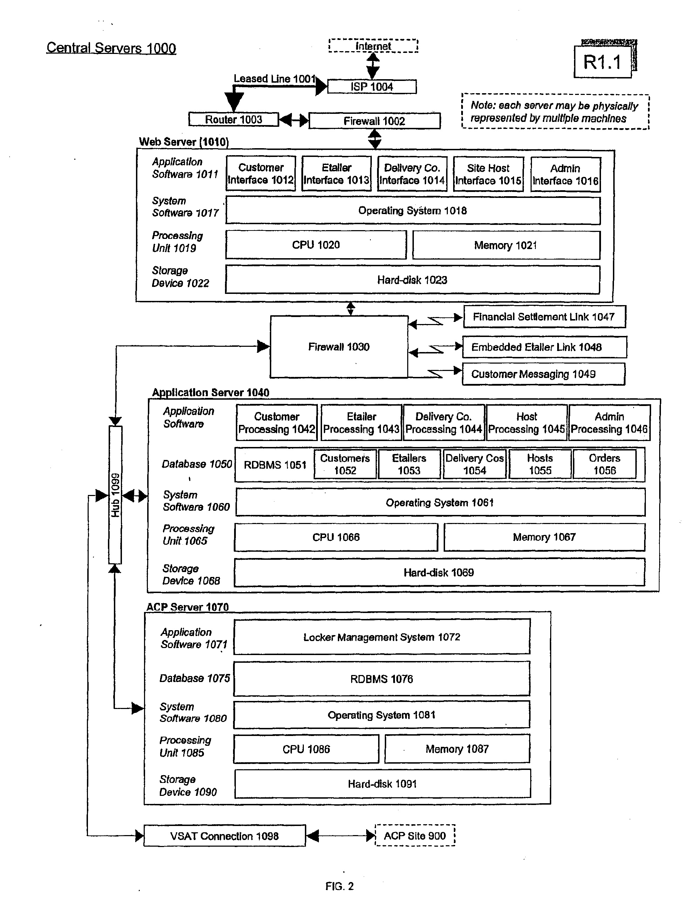

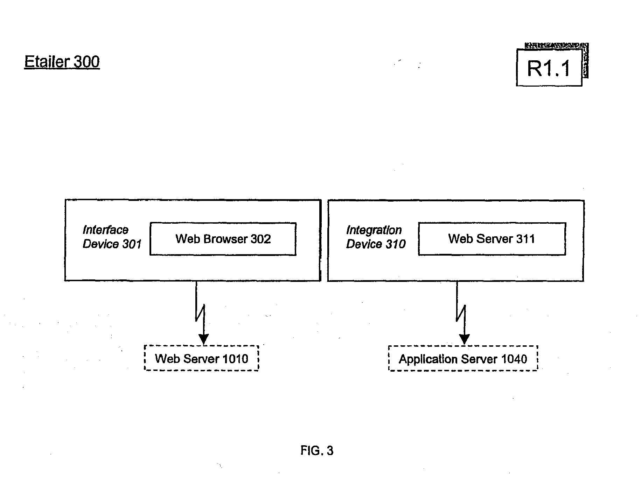

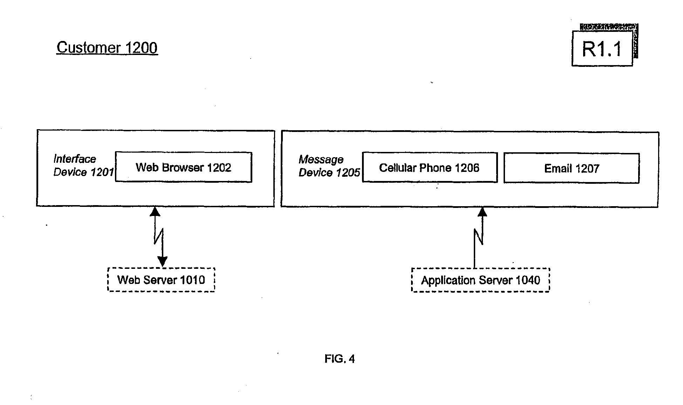

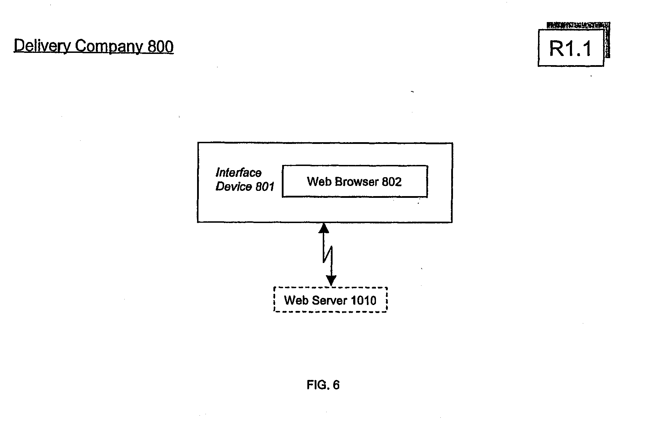

A network architecture for the locker management system is illustrated in Figure 2-4, 6. The architecture includes one or more of the following components:
1. Internet Service Provider ISP 1004.
2. Leased Line 1001.
3. Web Server 1010
4. Application Server 1040
5. ACP Server 1070
6. Firewalls 1002 and 1030
7. Router 1003 and Ethernet network cabling
8. Hub 1099
9. Communication connection between the ACP Sites and the ACP Server. In an embodiment of the invention, the communication connection may be a VSAT Connection 1098
10. ACP Site 900
11. Host Interface Device 1110
12. Host Communication Device 1103.
13. Etailer Interface Device 301 Fig 3
14. Etailer Integration Device 310 Fig 3
15. Customer Interface Device 1201 Fig 4
16. Customer Message Device 1205 Fig 4
17. Delivery Company Interface Device 801 Fig 6

The ISP 1004 provides connectivity between the ACP system and the Internet. This connectivity is established by connecting the Web Server 1010 to the ISP 1004 through the Leased Line 1001 connected to a Router 1003. The Router 1003 is connected to the Hub 1099 via a Firewall 1002. The Web Server 1010 may be connected to the other servers in the ACP system using a CAT5 coaxial cable connection to the Ethernet Hub 1099. The Web Server 1010 hosts the web sites and performs the web processing required in the ACP system. The Web Server 1010 only communicates with the Application Server 1040 and other servers on the Internet via the ISP 1004; it does not communicate directly with the ACP Server 1070 -this is conducted through the Application Server 1040.

The Application Server 1040 also connects to the other servers through a CAT5 coaxial cable connection to the Ethernet Hub 1099, via a Firewall 1030. The Application Server 1040 performs most of the business logic in the ACP system. It works with the Web Server 1010 and ACP Server 1070 to send and receive information to users of the ACP System. The users are customers, etailers, delivery companies and ACP site hosts.

The ACP Server 1070 is the gateway through to the ACP sites. It is connected to the other servers through a CAT5 coaxial cable connection to the Hub 1099, and to the ACP Sites via a connection medium that supports Internet Protocol IP communication. In an embodiment of the invention, this connectivity may be through a VSAT Connection 1098. The ACP Server communicates only with the Application Server 1040 and the ACP Sites 900; it does not communicate directly with the Web Server 1010 - this is conducted through the Application Server 1070 via the Hub 1099.

The ACP Site 900 is the actual bank of lockers to which customers' packages are delivered. The ACP Sites 900 communicate only with the ACP Server 1070. This communication can be conducted using any communication medium that supports IP. In the first implementation of this invention, this connectivity will be through a Communications Socket 1104 which will be a PES connector which will enable connectivity to the VSAT Connection 1098 at the ACP Server 1070.

Delivery companies relate to the system in two ways. First, their delivery personnel actually perform the delivery of the packages to the ACP Sites 900. This activity is conducted through the ACP Site 900 interface, which may comprise one or more of an LCD Screen 951, a Keypad 952, a series of Buttons 953 and a Barcode Reader 954. Secondly, the delivery company can view the information on deliveries made by their delivery personnel using the Delivery Company Interface 801. This is typically a web browser running on a PC owned by the delivery company. The delivery company will have access, through its web browser, to a dedicated part of the ACP system's Web Server 1010.

Hosts have a communications capability into which the ACP Sites are connected. As explained above, this communications capability can be anything that supports IP which, in the first implementation of this invention, will be a VSAT network. The host must therefore install a PES socket at the host site. The ACP Site i.e. the bank of lockers will connect to this PES socket.

Hosts are also able to connect to the ACP system to view information about deliveries made to the ACP Site 900 that they are hosting. This connection is done through a Host Interface Device 1110 which connects to the ACP system through the Web Server 1010. This Host Interface Device 1110 will typically be a web browser running on a standard PC owned by the host. The host will have access, through its web browser, to a dedicated part of the ACP system's Web Server 1010.

Etailers that are integrated into the ACP system do so through a connection to the ACP Server 1040. This is established through an Integration Device 310 residing on the etailer's system. This Integration Device 310 will typically be a computer program supplied as part of this invention, which runs on an etailer's server computer provided by the etailer. Etailers are also able to interface with the ACP system to view information about their relationship with the ACP system and past orders. This interface is conducted through the Interface Device 301, which will typically be a web browser running on a PC owned by the etailer. The etailer will have access, through its web browser, to a dedicated part of the ACP system's Web Server 1010.

Customers interface with the ACP system using an Interface Device 1201 owned by the customer. This will typically be a web browser running on a PC. The ACP system sends messages to customers using a Message Device owned by the customer. This will typically be an email account, cellular phone or pager.

### Detail of each part of the system architecture

The system architecture for a first embodiment of the apparatus and method of the present invention is illustrated in figures 2 through 7. In a preferred embodiment, the apparatus of the present invention comprises Central Servers 1000 which connects to ACP Site 900, Host 1100, Customer 600, Delivery Company 800 and Etailer 700. The system architecture for each of these components will now be discussed.

### Central Servers 1000

Figure 2 illustrates the Central Servers 1000, which comprise a Web Server 1010, Application Server 1030 and ACP Server 1090. In a preferred embodiment of this invention, each server will physically reside on its own dedicated machine. A conventional server with sufficient storage, memory and processing capability will be sufficient for each of these machines.

Central servers connect to each other over an internal 10/100 Ethernet network. Each server has a conventional Ethernet Network Interface Card NIC, which is connected to an Ethernet Hub 1099 using standard Category 5 CAT5 cable.

At a high-level, the Web Server 1010 controls the interface between the World Wide Web and the Application Server 1040, the Application Server 1040 performs the business logic, and the ACP Server 1070 controls the interaction with the ACP sites 900. The detailed role of each server will now be discussed.

### Web Server 1010

The purpose of Web Server 1010 is to host the web sites that are used to manage the flow of information between other Central Servers 1000 and external devices used by other participants in the process. These participants are Customers 600, Hosts 1100, Delivery Companies 800, and Etailers 700. The Web Server 1010 has only a minimal amount of business logic - its main role is to provide an interface to the data and business logic of the Application Server 1040.

Web Server 1010 is connected to the Internet. This connection can be arranged with any standard Internet Service Provider ISP 1004 and will include a Leased Line 1001. The Leased Line 1001 is a physical connection between the Web Server 1010 and the ISP's 1004 server. The Leased Line 1001 terminates at the server room of the Central Servers 1000 through a communications socket which feeds into a Router 1003. The Router 1003 can be any commercial router compatible with the configuration of the Leased Line 1001. In the first implementation of this invention, a Cisco 804 router will be used for this purpose. Other equivalents will be apparent to those skilled in the art.

The speed requirements for the Leased Line 1001 will depend on the volume of traffic going between Customers' 600 Interface Devices 1201 and Web Server 1010. In a first installation of this invention, a 256kpbs leased line will be sufficient.

A Firewall 1002 should be installed between the Web Server 1010 and the Leased Line 1001. The purpose of the Firewall 1002 is to protect the Web Server 1010 and therefore all Central Servers from unwanted intrusions via the Internet. As a minimum, the firewall it configured to allow traffic through on ports 443 Secure System Layer and 80 web traffic. Other ports maybe allowed if remote monitoring by system support personnel is required. Similarly, the Web Server 1010 is configured to listen on ports 443 and 80, along with any other ports required for remote support.

A second Firewall 1030 should be installed between the Web Server 1010 and the Ethernet Hub 1099. This is to provide further protection to the Application Server 1040 and the ACP Server 1070 should an intruder manage to break through the first Firewall 1002. Firewall 1030 is also used by Application Server 1040 when making external connections not via the Web Server 1010.

The Web Server's 1010 Application Software 1011 is a set of computer programs. The scope of these computer programs is restricted to displaying information on web pages, receiving and validating responses from users customers, delivery companies, administrators, etailers and hosts and passing these responses down to the Application Server 1040 via the Firewall 1030. The Application Server's 1040 responses will be fed back up to the Web Server 1010 via the Firewall 1030. The appropriate Application Software 1011 will manage the displaying of the response on the web site.

The Application Software 1011 computer programs can be coded in any language or combination of languages that is capable of displaying web pages on the World Wide Web and that can communicate, through Firewall 1030, with the Application Server 1040.

In an implementation of this invention, the computer programs may be coded in HTML with a combination of static graphics, such as JPEG files, as well as animated graphics, such as animated GIFs. These computer programs are organised into five sets of modules: Customer Interface 1012, Etailer Interface 1013, Delivery Company Interface 1014, Site Host Interface 1015 and Administration Interface 1016.

Customer Interface 1012 manages the web-based interaction between customers who are arranging for goods to be delivered to an ACP site. The functionality of the Customer Interface 1012 will be to display the information described in REGISTER 100 and SCHEDULE DELIVERY 300. Customer Interface 1012 will also provide the interface through which customers can change their details specified in REGISTER 100, as well as displaying information about previous deliveries, such as date of delivery and collection code.

Etailer Interface 1013 enables registered etailers to access and analyse information about goods that were delivered from them to an ACP site resulting from a customer purchase. This information will be browse only. Delivery Company Interface 1014 enables registered delivery companies to access and analyse information about goods that were delivered by them to an ACP site. This information will be browse only. Site Host Interface 1015 enables ACP site hosts to access and analyse information about goods that were delivered to their ACP sites. This information will be browse only.

Administrator Interface 1016 will be used by ACP support personnel to administer the ACP infrastructure. Tasks include adding and deleting site hosts and accessing customer details. The Administrator Interface 1016 will allow information to be accessed in browse, add, change and delete modes, depending on the security profile of the user.

In order to interface with the Web Server's 1010 hardware, the Application Software 1011 requires some System Software 1017. Specifically, an Operating System 1018 is installed on the Web Server 1010. This can be a conventional server operating system. The main stipulation is that a compiler for this operating system must exist for the language in which the Web Server's 1010 Application Software 1011 is coded. In the first implementation of this invention, Microsoft's Windows NT operating system will be used.

Web Server 1010 will have a conventional hard-disk magnetic or optical Storage Device 1022 arranged in a Random Array of Inexpensive Disks RAID configuration. No business data will be stored on this unit - all business data will be stored on the storage unit of the Application Server 1040. The only data that will be stored on the storage device of the Web Server 1010 will be the Operating System 1018 and the Application Software 1011.

### Description of the Application Server 1040

The role of the Application Server is to process the information received from the Web Server 1010 and from the ACP Server 1070. Users cannot interface directly with the Application Server 1040; rather, users access the application server 1040 via the Web Server 1010. Like the Web Server 1010, the Application Server 1040 has an Application Software 1041 layer. This Application Software 1041 is a set of computer programs. These programs can be coded in any language or combination of languages that supports interfacing with the Web Server 1010 via the Firewall 1030. The programming language also supports interfacing with a Relational Database Management System RDBMS, 1050. In the first implementation of this invention, the Application Software 1041 programming language will be Microsoft's Visual Basic with some C++ extensions.

The Application Software 1041 computer programs are organised into five sets of modules: Customer Processing 1042, Etailer Processing 1043, Delivery Company Processing 1044, Host Processing 1045 and Administration Processing 1046.

Customer Processing 1042 provides the customer-related business logic to support the REGISTER 100, SCHEDULE DELIVERY 200 and COLLECTION 400 processes. The Customer Process 1042 also contains the logic to maintain customer's details through the Customer Interface 1012.

Etailer Processing 1043 provides the etailer-related business logic to support the SCHEDULE DELIVERY 200 and PARTNER SETTLEMENT 600 processes, as well as the database access and data manipulation for the Etailer Interface 1013.

Delivery Company Processing 1044 provides the delivery company-related business logic to support the DELIVER 300 and PARTNER SETTLEMENT 600 processes, as well as the database access and data manipulation for the Delivery Company Interface 1014.

Host Processing 1045 provides the host-related business logic to support the PARTNER SETTLEMENT 600 process, as well as the database access and data manipulation for the Site Host Interface 1014.

Unlike the Web Server 1010, the Application Server 1040 requires a Database 1050 to store business data. Any commercial Relational Database Management System RDBMS 1051 should be sufficient for this purpose, although an ODBC compliant database is preferred. The first implementation of this invention uses Microsoft's SQL Server RDBMS.

This business data stored on the RDBMS 1051 can be grouped into six databases: Customers 1052, Etailers 1053, Delivery Companies 1054, Hosts 1055 and Orders 1056.

Customers 1052 holds information about customers that was initially captured during the REGISTER 100 process. This information includes name, email address and contact telephone number, as well the customer's list of preferred ACP sites.

Etailers 1053 holds information about registered etailers. This includes the details of the etailer's financial arrangement within the ACP process.

Delivery Companies 1054 holds information about registered delivery companies. This includes the details of the delivery company's financial arrangement within the ACP process.

Hosts 1055 holds information about ACP site hosts. This includes the site's address as well as the details of the site host's financial arrangement within the ACP process.

Orders 1056 holds information on every order that is processed through an ACP site. Details include the date of delivery, the parcel ID, the collection code, the customer, the etailer if registered, the delivery company if registered and the site host.

The Application Server 1040 needs to communicate with other devices outside the Central Servers 1000 network, but not via the Web Server. These processes includes the Embedded Etailer Link 1048, the Customer Messaging 1049 and the Financial Settlement 1047. To protect the Central Servers 1000, this communication is conducted via a firewall. The Firewall 1030 can be used for this purpose, shared with the Web Server 1010.

The Embedded Etailer Link 1048 is a computer program provided by the ACP service to registered etailers. The Embedded Etailer Link 1048 is integrated into the Etailer's web site and is invoked by the customer by pressing the button on the Etailer's site that is associated with the Embedded Etailer Link 1048. The Embedded Etailer Link 1048 controls the communication between the registered etailer's site and the Application Server 1040. This supports the SCHEDULE DELIVERY 200 process for registered etailers.

The Customer Messaging Link 1049 manages the communication between the Application Server 1040 and the customer. The Customer Messaging Link 1049 currently supports communicating via email, text-to-voice over standard telephone or cell phone, and text messaging using Short Message Service SMS on cell phones. Customers can choose over which medium they would like to be communicated during the DELIVER 300 process sending customers their collection codes when their goods are delivered, and ORDER EXPIRY 600 process reminding customers to collection their goods and inform them when their order has expired.

As well as enabling access to information, the Etailer Processing 1043, Delivery Company Processing 1044 and Host Processing 1045 modules manage the financial relationships between all parties in the ACP network. Settling the financial positions requires access to third-party servers outside the Central Servers 1000 network. Also, taking payments from customers for late collection COLLECT 400 process requires access to third-party networks such as the VISA credit card clearing network. Access to all external financial networks is managed by the Financial Settlement Link 1047.

To run the Application Software 1041 on the Application Server 1040, some System Software 1060 is installed on the Application Server 1040. This System Software 1060 includes an Operating System 1061, as well as any other system monitoring or performance tuning software required to maintain and support the Application Server 1041. The Operating System 1061 can be any commercial server operating system, providing a compiler is available for the language in which the Application Software 1041 is written. In the first implementation of this invention, the Operating System 1081 to be installed on the ACP Server 1070 will be Microsoft's Windows NT.

The Processing Unit 1065 will contain conventional processing apparatus including a Central Processing Unit CPU 1066 and Memory 1067 - both Random Access Memory RAM and Read Only Memory ROM.

The Storage Device 1068 will be conventional Hard Disk 1069 magnetic or optical storage units arranged in a Random Array of Inexpensive Disks RAID configuration, or other secondary storage systems apparent to those skilled in the art.

The Application Server could be split into three separate servers: an Application Server to run the Application Software 1041, a Database Server dedicated to running the RDBMS 1051, and a File Server dedicated to serving any files that may be required to administer the service for example, word processing documents or spreadsheets. The Application Server should have a fast processor and average amount of RAM. The Database Server should have a fast processor, a lot of RAM, and a RAID array of hard-disks with enough capacity to hold all the business information. The File Server should have an average processor with a lot of RAM. Subsequent implementations of this invention might take this approach, which should result in faster performance at high volumes.

### The ACP Server 1070

The ACP Server 1070 manages the communication between each ACP Site 900 and the Application Server 1070. The ACP Server has an Application Software 1071 layer. The Application Software 1071 contains the Locker Management System 1072. The Locker Management System 1072 responds to messages from Application Server 1040 and the ACP Sites 900 to perform the functions specified in DELIVER 300, COLLECT 400 and ORDER EXPIRY 600.

All communication is asynchronous between the ACP Server 1070 and the Application Server 1040, and the ACP Server and the ACP Sites 900. This is to ensure that the entire ACP system can continue to function for a reasonable period in the event of a communication breakdown. For example, if a communication failure occurred between the ACP Server 1070 and the ACP Sites 900, then the ACP Sites 900 would still be able to perform the DELIVER 300 and COLLECT 400 processes. The messages would simply be stored at the ACP Site 900 and would be re-sent automatically once the communication had been re-established. If the communication were synchronous which it isn't then the ACP Site 900 would be out of action until the communication problem had been fixed.

Unlike the Application Server 1040, the Locker Management System has a series of screens which are used to monitor and maintain the ACP Sites 900. As well as responding reactively to requests from Application Server 1040 and ACP Sites 900, the Locker Management System 1072 routinely conducts proactive checks on each ACP Site 900. The status of each ACP Site 900 down to the level of individual Lockers 970 is established and a warning is displayed on the Locker Management System 1072 screen to alert support personnel of the problem.

The Locker Management System 1072 can be coded in any programming language that supports communication with the Application Server 1040, the ACP Sites 900 and the ACP Server's 1070 RDBMS 1076. In the first implementation of this invention, the Locker Management System will be programmed in Java.

The ACP Server 1070 requires a Database 1075. The Database 1075 will be an RDBMS 1076 and can be any commercial RDBMS that is able to communicate with the Locker Management System 1072. In the first implementation of this invention, the Database 1075 will be built using Microsoft's SQL Server RDBMS product.

The data stored on the RDBMS 1076 can be grouped into Locker Details 1077 and Pending Messages 1078. Locker Details 1077 stores information on the configuration of all ACP Sites 900. Pending Messages 1078 contains information on deliveries or collections. These messages are from both the ACP Sites 900 and the Application Server 1040 that are destined for each other. The messages are only deleted from the Database 1075 once the ACP Server 1070 has confirmation of receipt from the target server.

To run the Application Software 1071 on the ACP Server 1070, some System Software 1080 it installed on the ACP Server 1070. This System Software 1080 includes an Operating System 1081, as well as any other system monitoring or performance tuning software required to maintain and support the ACP Server 1070. The Operating System 1081 can be any commercial server operating system, providing a compiler is available for the language in which the Locker Management System 1072 is written. In the first implementation of this invention, the Operating System 1081 to be installed on the ACP Server 1070 may be Microsoft's Windows NT™. Other suitable operating systems will be apparent to those skilled in the art.

The Processing Unit 1085 will contain conventional processing apparatus including a Central Processing Unit CPU 1086 and Memory- both Random Access Memory RAM and Read Only Memory ROM 1087.

The Storage Device 1090 will be conventional Hard Disk 1091 magnetic or optical storage units arranged in a Random Array of Inexpensive Disks RAID configuration.

The ACP Server 1070 connects directly to the Ethernet Hub 1099 using standard CAT5 cable. However, the ACP Server 1070 connects remotely to the ACP Sites 900, because the distance between the ACP Sites 900 and the ACP Server 1070 is too far to implement a direct connection. The physical communication medium used to connect the ACP Server 1070 with the ACP Sites 900 can be anything that supports the TCP/IP protocol. In the first implementation of this invention, the communication medium will be 2-way VSAT. Other communication media will be apparent to those skilled in the art.

The VSAT connectivity may be implemented by connecting the Hub 1099 to a VSAT Connection 1098. The ACP Server will send messages via the Hub 1099 over the VSAT network to the ACP Sites 900.

The communication between the ACP Server 1070 and the ACP Sites 900 does not have to be point-to-point. Instead, the communication could be conducted over the Internet via a connection between the ACP Sites 900 and an Internet Service Provider ISP. The ACP Sites 900 could simply use a modem and a Plain Old Telephone System POTS connection to dial-up the ISP.

### B. Description of the Etailer 700

In the context of this invention, an Etailer 700 is a company that sells products through an online medium rather than through a physical store. In an embodiment of the invention, there are two types of Etailers: registered and non-registered. Registered Etailers 700 have a relationship with the ACP network and integrate directly with the Application Server 1040; non-registered Etailers have no relationship with the ACP network.

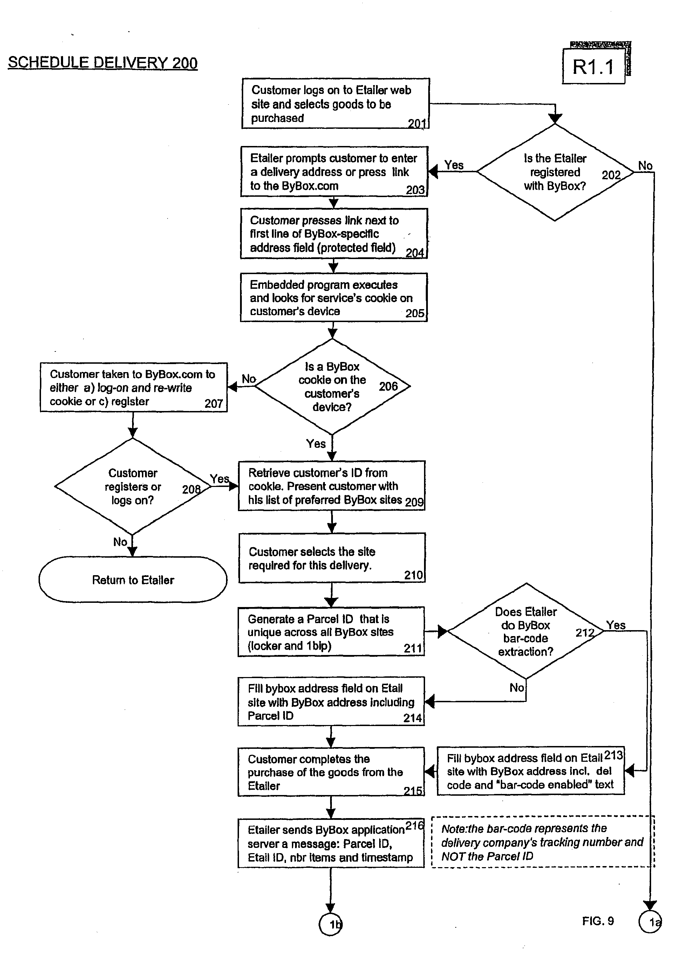

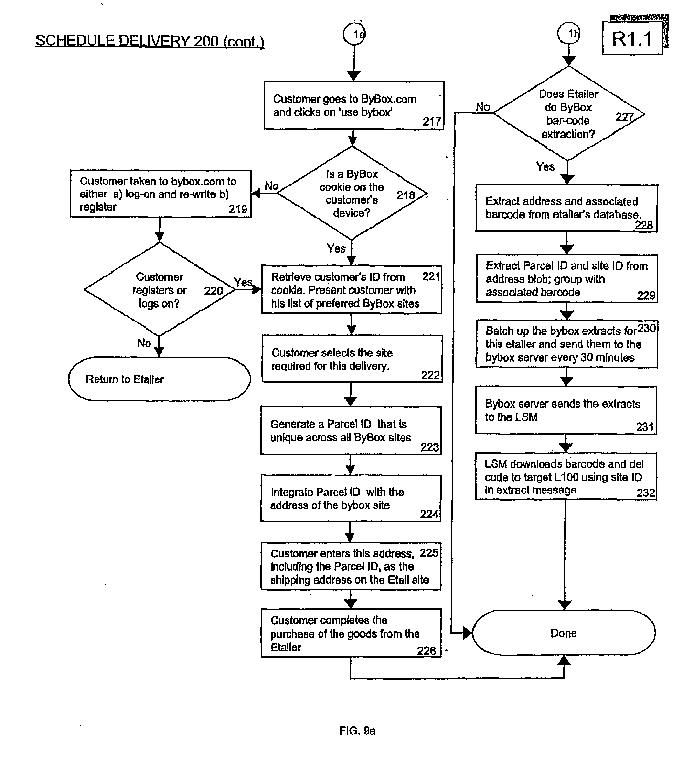

Non-registered Etailers do not require any apparatus to participate in the ACP network because their Customers 400 may perform the ACP processing, as illustrated by a decision point 202 in the SCHEDULE DELIVERY 200 process illustrated in Figure 9.

Registered Etailers 700 employ an Interface Device 301 to view information on orders sent by them to ACP Sites 900. In an embodiment of the invention, the Interface Device 301 may be a Web Browser 302 running on a conventional PC or server. This Web Browser will be used to access the ACP web site hosted on Web Server 1010 to view the Etailer's 700 information. Other embodiments of this invention may support interfacing through other web-enabled devices such as cellular phones, personal organizers, televisions and radios.

Registered Etailers 700 also employ an Integration Device 310. This Integration Device will host the Embedded Etailer link 1048 that integrates the Etailer 700 with the Application Server 1040.

### C. Description of the Customer 400

In the context of this invention, a Customer 400 is a person who buys goods from an etailer. However, embodiments of this invention also support use by customers who purchase goods from mail order companies.

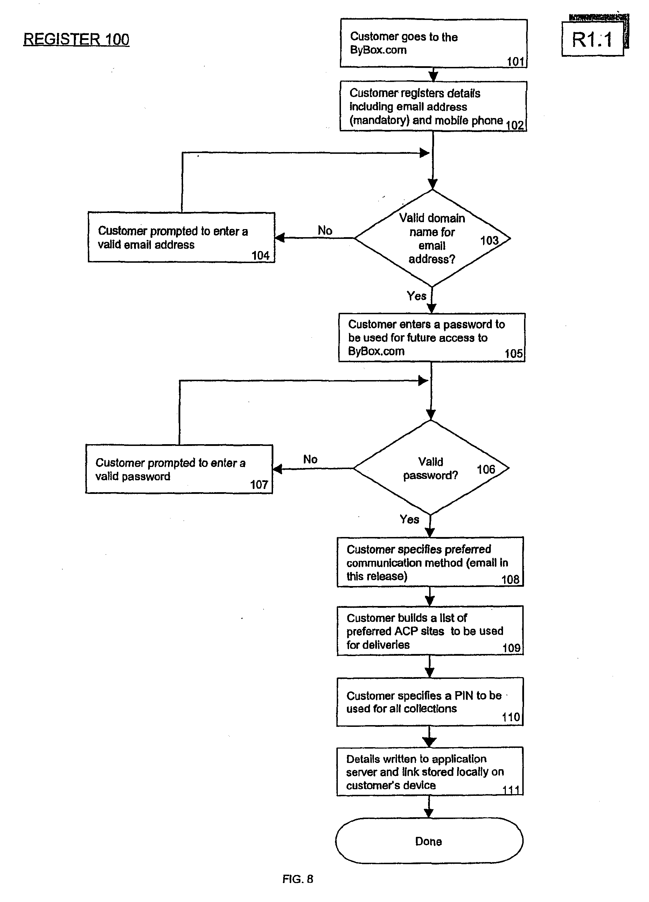

To use the ACP network, a customer employs an Interface Device 401 and a Message Device 405. The Interface Device 401 is used by the Customer 401 to access the Web Server 1010. This interaction is illustrated by the flowcharts for the REGISTER 100 process in figure 8 and SCHEDULE DELIVERY 200 process in figure 9. In an embodiment of this invention, the Interface Device 401 may be a Web Browser 402 running on a conventional personal computer PC. This Web Browser will be used to access the ACP web site hosted on Web Server 1010 to perform the REGISTER 100 and SCHEDULE DELIVERY 200 functions. Other embodiments of this invention may support interfacing through other web-enabled devices such as cellular phones, personal organizers, televisions and radios.

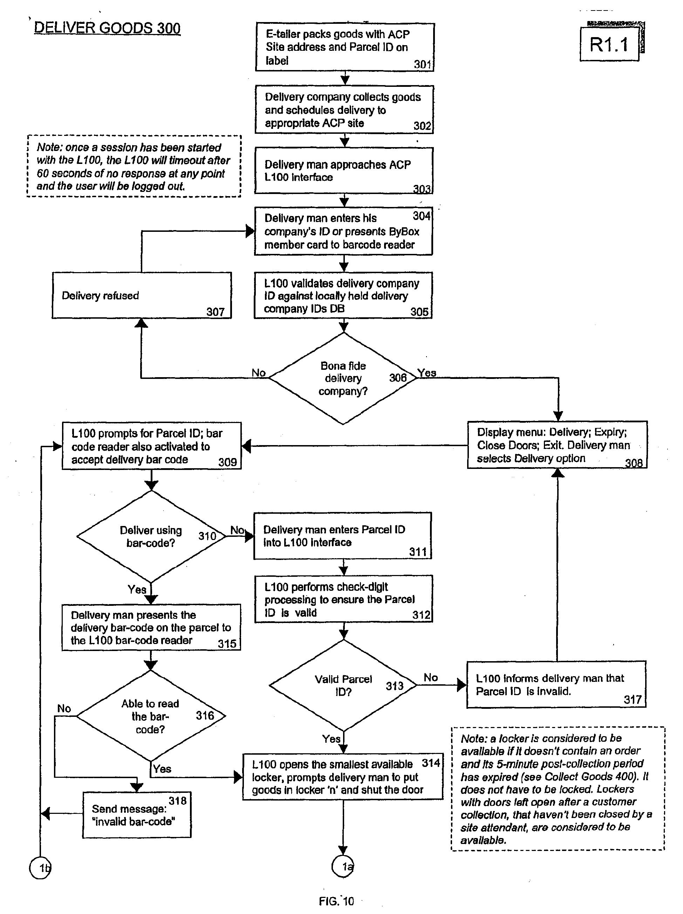

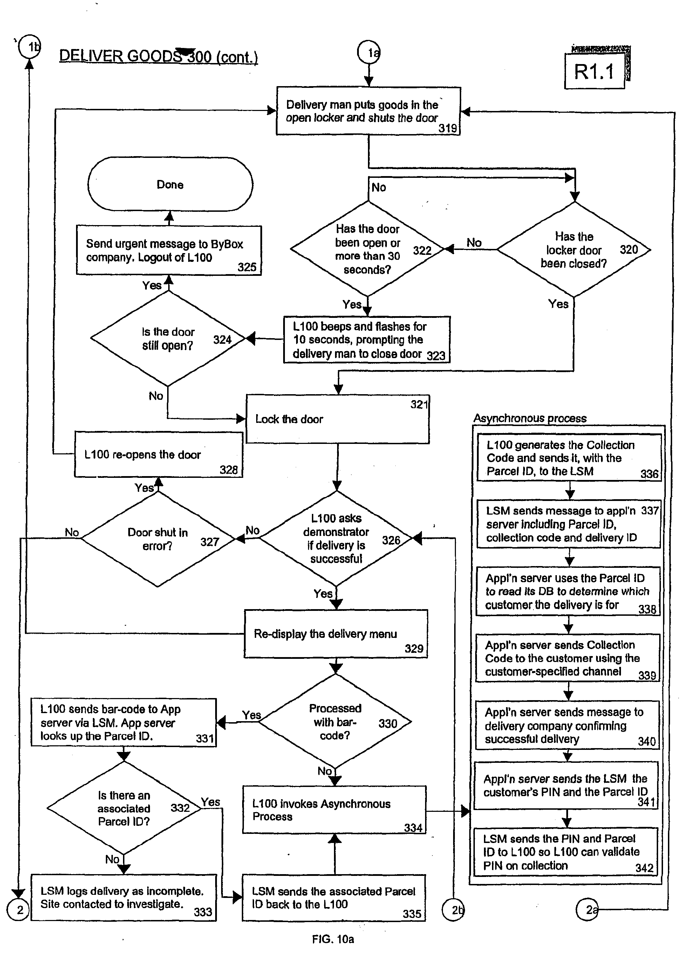

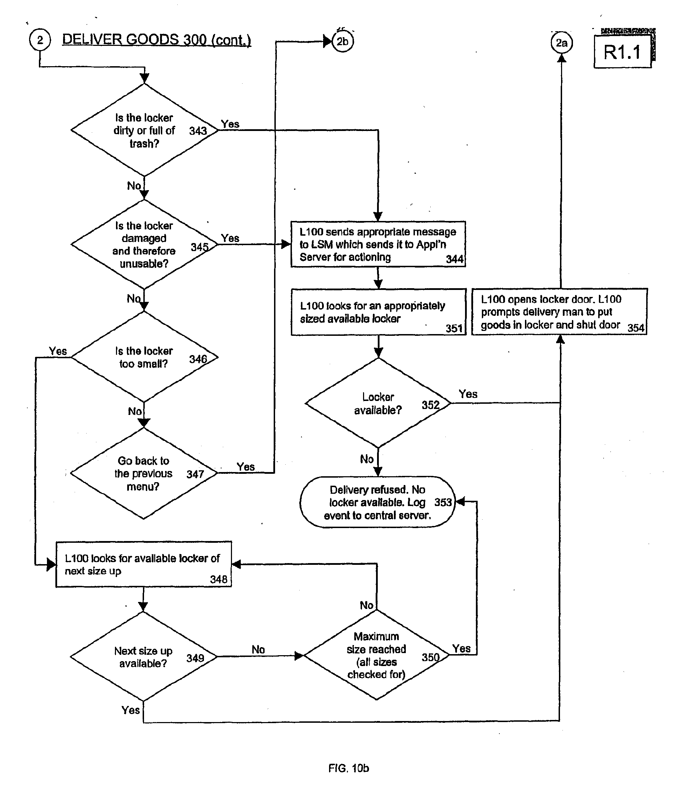

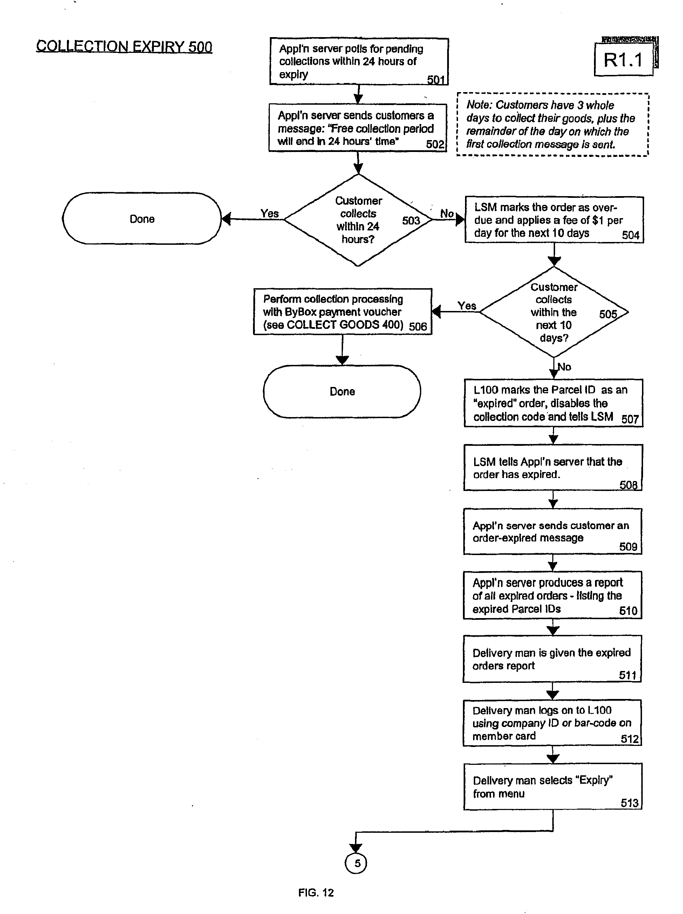

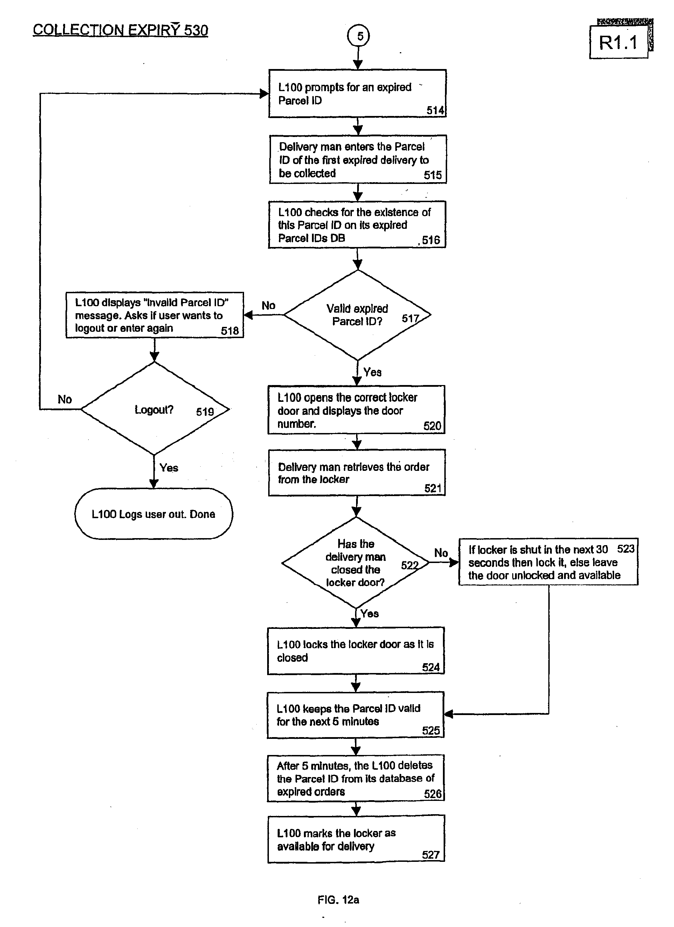

The Message Device 405 is used by the Application Server 1040 to send messages to Customers 400. This process is illustrated in the DELIVER 300 function in Figures 10 10a 10b and the COLLECTION EXPIRY 500 function in Figure 12. In an embodiment of the invention, this Message Device can be either a conventional Email 406 account or a Cellular Phone 407 that supports a Short Message Service SMS.

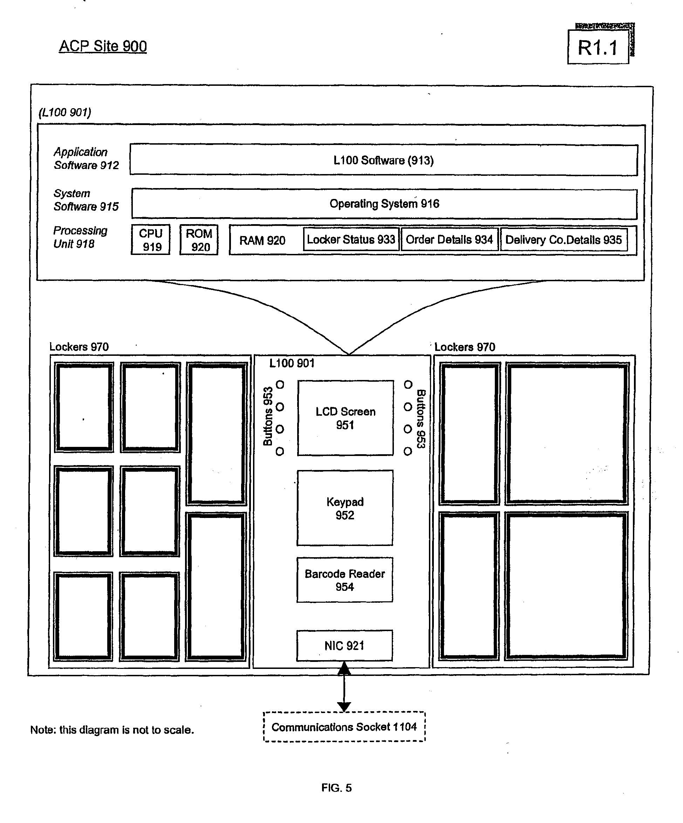

### D. Description of the ACP Site 900 Figure 5

The ACP Site 900 is a bank of Lockers 970, situated inside or outside a Host's 1100 building. The Lockers 970 are in a range of sizes. The Lockers 970 are managed by a central console 901. In embodiments of the invention, the central console 901 has a user interface which may include one or more of the following: an LCD screen 951, a series of metal Buttons 953 to the left and right of the screen, an electronic numeric Keypad 952 and a Barcode Reader 954. The lockers are operated entirely electronically using the Buttons 953, the Keypad 952 and the Barcode Reader 954; no mechanical keys are involved. The central console may also have the ability to integrate with a credit card reader, cash receiver, or a printer. In some embodiments, the device does not include a keypad.

The Lockers 970 are locked and unlocked using electronic locking devices which respond to signals from the Processing Unit 918. The locking devices can be any door-locking devices capable of being controlled electronically by a CPU.

The Processing Unit 918 contains a motherboard with a CPU 919 and memory. The CPU 919 can be any CPU capable of being programmed to operate the locking devices and communicate with the Locker Management System 1072. In an embodiment of this invention, the Motorola 6088 processor will be used. Other embodiments will be apparent to those skilled in the art.

In embodiments of the invention, two types of memory are employed: Read Only Memory ROM 920 and Random Access Memory RAM 921. ROM 920 stores the System Software 915 and Application Software 912, but cannot be modified by the System Software 915 or Application Software 912. So in addition to ROM 920, some RAM 921 is used by the System Software 915 and Application Software 912 to store details of locker status and store messages received from the Locker Management System 1072. Solid state memory i.e. RAM is preferred to a hard-disk or any other storage device containing moving parts. This is because the ACP Site will be in unattended as well as attended situations which may result in the ACP Site being jostled: moving-part storage could malfunction in this environment.

The data stored in RAM 921 can be grouped into three areas: Locker Status 933, Order Details 934 and Delivery Company Details 935. Locker Status 933 contains the current status of each Locker 970. Order Details 934 contains collection code and PIN information. Delivery Company Details contains details of delivery companies who are registered to use the ACP Site 1070.

The Locker Management System 1072 performs frequent checks on each central console 901 to determine the status of its Lockers 970. These checks are performed every few seconds. In the event of a central console 901 crash, when the central console 901 is re-booted it will re-establish its connection to the Locker Management System. However, re-booting the central console 901 will result in losing the contents of its RAM 920. The central console 901 will therefore ask the Locker Management System 1072 to re-populate its RAM 920 with the contents at the time of re-boot.

Application Software 912 is required to control the central console 901. The Application Software 912 is called central console Software 913. The CENTRAL CONSOLE Software 913 is a collection of computer programs. The computer programs can be written in any language or collection of languages capable of running on an Operating System 916 that contains an Internet Protocol IP stack. In the first implementation of this invention, MicroWare's OS/9 operating system will be used. Other equivalents will be apparent to those skilled in the art. The functional requirements of the CENTRAL CONSOLE Software 913 are detailed in the DELIVER 300, COLLECT 400 and ORDER EXPIRY 600 processes.

The CENTRAL CONSOLE 901 also contains a Network Interface Card NIC 921. This NIC 921 can be any 10/100 Ethernet NIC. The NIC is required to establish connectivity with the Locker Management System 1072. This connectivity can be conducted using any medium that supports the TCP/IP protocols. An implementation of this invention may be conducted using 2-way VSAT. The NIC 921 that comes out of the CENTRAL CONSOLE 901 will be connected to a standard VSAT PES connector residing at the host ACP Site 900.

The communication between the Locker Management System 1072 and the central console 901 could also be conducted over the Internet via a connection between the ACP Sites 900 and an Internet Service Provider ISP. The ACP Sites 900 could simply use a modem and a Plain Old Telephone System POTS connection to dial-up the ISP.

### E. Description of the Delivery Company 800

In the context of this invention, a Delivery Company 800, as illustrated in Fig. 6, is a company that delivers parcels from Etailers 700 to Customers 400. This invention involves Delivery Companies 800 delivering to an ACP Site 900 rather than to a Customer 400. No apparatus is required for the Delivery Company 800 to operate the ACP Site 900 - refer to Deliver 300 for an explanation of this process.

In embodiments of the invention, the Delivery Company 800 is able to view information about the deliveries they have performed refer to Delivery Company Interface 1014 in Central Servers 1000. To do this, the Delivery Company requires an Interface Device 801. In the first implementation of this invention, the Interface Device 801 is a Web Browser 802 running on a conventional PC. This Web Browser will be used to access the ACP web site hosted on Web Server 1010 to view the Delivery Company's 800 information. Embodiments of this invention may support interfacing through other web-enabled devices such as cellular phones, personal organizers, televisions and radios.

### F. Description of the Host 1100

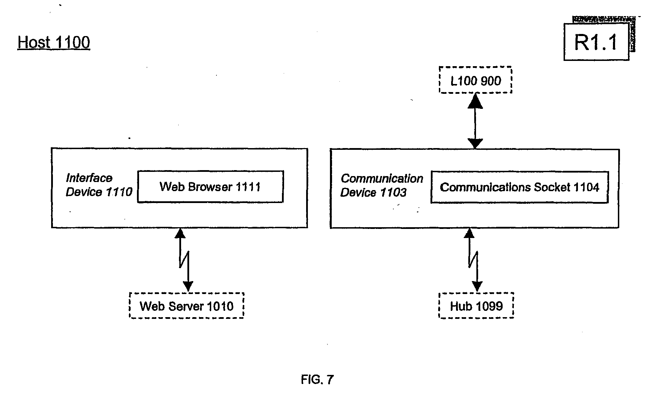

In the context of this invention, a Host 1100, as illustrated in Figure 7, is an organization that places an ACP Site 900 either inside its building or outside. If the ACP Site 900 is outside, it will be surrounded with a protective shell.

The only apparatus required by the Host 1100 is a Communications Device 1101 to enable the central console 901 to communicate with the Locker Management System 1072. In an embodiment of this invention, this Communications Device 1102 may be a VSAT PES.

The Host 1100 will also require an Interface Device 1110 if it would like to access the information about the deliveries made to its ACP Site 900--see Host Interface 1015 for details of this information. In an embodiment of this invention, the Interface Device 1110 may be a Web Browser 1111 running on a conventional PC or server. This Web Browser 1111 will be used to access the ACP web site hosted on Web Server 1010 to view the Host's 1100 information. Future embodiments of this invention will support interfacing through other web-enabled devices such as cellular phones, personal organizers, televisions and radios.

### G. Process Flow of the Invention

Figure 8 illustrates a flowchart for a process flow in the present invention, in which delivery of remotely purchased goods is scheduled and made to any one of a network of Automated Collection Points ACPs, with the Central Servers 1000s managing the process. The Customer 400 first Registers 100 for the service by logging on to the web server and providing contact details. In embodiments of the invention, these contact details may include a Personal Identification Number PIN. At some subsequent time the Customer 400 then buys goods from an Etailer 700. When asked for the delivery address the Customer 400 then Schedule a Delivery 200 at their preferred ACP Site 900; the Central Servers 1000 assigns the goods a unique Package ID. The goods are then Delivered 300 to the ACP Site 900 and put into a secure locker by the deliverer using the Package ID. Once the door is shut the ACP contacts the Central Servers 1000s, which then contacts the Customer 400 telling them that their goods have arrived and giving them a Collection Code for that order. At his own convenience the Customer 400 then visits the ACP Site 900 and Collects his Goods 400 from the locker using his PIN and the Collection Code associated with the package. At the end of every month the Central Servers 1000 analyses all deliveries and arrange for monetary settlement to take place between all involved parties in Partner Settlement 600

### List of Processes of the Invention

| **Process** | **Description** |
|---|---|
| | |
| Register 100 | How customers register with the ACP system |
| Schedule Delivery 200 | How customers arrange for a purchase to be delivered to an ACP site |
| Deliver Goods 300 | How the deliverer interfaces with the ACP site to put the customer's purchase into an available locker, as well as how customers are informed that their purchase is ready for collection |
| | |
| Collect Goods 400 | How customers interface with the ACP site to collect their purchases |
| Collection Expiry 500 | What happens when customers do not collect their purchases from the ACP site for the pre-defined time period |
| Partner Settlement 600 | How payments are administered between etailers, hosts and delivery companies |
| Close Doors 1300 | How open lockers can be shut and locked |
| Delivery Company Registration 1400 | How delivery companies register with the ACP system |
| ACP Host Registration 1500 | How ACP hosts register with the ACP system |
| Etailer Registration 1600 | How etailers register with the ACP system |

### H. Descriptions of the Processes of the Invention

Note: some of the Figures that are referenced in the following process flow descriptions make reference to the web site "ByBox.com". This is an example name for the web site that is hosted by the Web Server 1010; it is simply easier for the reader to give the web site an example name than to keep referring to it as "the ACP web site".

### Register 100

With reference to FIG. 8 there is described the process by which the Customer 400 registers. At step 101 the Customer 400 establishes a connection to the Application Server using a Customer 400 modem. In one embodiment the Central Server 1000, has a page on the world wide web and access to the Application Server is through a dedicated web server. In such an embodiment the Customer 400 provides information through the interface of conventional web browser software such as Microsoft Internet Explorer ™. At step 102 the Customer 400 provides details to register for the service. These include email address, phone numbers including cellular and home address. Email is the primary communication medium for the service and at step 103 the email address is validated to check for correct syntax. At step 104 the Customer 400 is prompted to add a correct address if his original entry is invalid.

Once all the Customer 400's contact details have been entered successfully step 105 prompts the Customer 400 to create a password for future access to their account data. This is a minimum of eight characters long. If an invalid password is entered step 107 prompts the Customer 400 to re-enter. Step 108 then asks the Customer 400 to specify their preferred communication method. As soon as goods are delivered to the ACP Site 900 and put in a locker the Central Servers 1000 sends a message to the Customer 400 informing them that their goods have arrived. The communication channel used for this message is selected using the Customer 400's preference: email, telephone, post. Step 109 then prompts the Customer 400 to build a list of preferred ACP Site 900s. After comparing addresses, such as home and office, with the network of ACP Site 900s the Customer 400 must elect preferred ACP Site 900s. Step 110 then asks the Customer 400 to specify a Personal Identification Number PIN. This is a four character numeric string that is used to identify the Customer 400, as opposed to their package, as part of the Collect Goods process 400.

Once all details have been added and validated, step 111 updates the Customer 400's account on the Application Server, assigns a Customer 400 ID and writes a cookie to the Customer 400's device providing a fast link to the Customer 400's details on the Application Server.

As soon as the Customer 400 has registered for the service he is able to order goods online and specify an ACP Site 900 as the delivery address. The Schedule Delivery process 200 describes how a Customer 400 uses the Application Server to arrange delivery to the prescribed ACP Site 900 using the Etailer 700 web-site. There are two discrete paths available based on whether the Etailer 700 provides access to the Application Server from their web-site. In cases where such a link exists the Etailer 700 is referred to as registered; where no such link exists they are described as non-registered.

### Schedule Delivery 200

FIG. 9 describes how a registered Customer 400 can schedule a delivery to an ACP Site 900. To make use of the service the Customer 400 must first order goods from an Etailer 700. At step 201 the Customer 400 goes to the Etailer 700 site and selects the goods required. As part of the purchase transaction the Etailer 700 will ask the Customer 400 to specify the address to which the goods should be delivered. If the Etailer 700 is registered there will be a button on the delivery address page of the Etailer 700 site that will link directly to the Application Server. At step 204 the Customer 400 presses this button and at step 205 a program embedded in the Etailer 700 site, executes and looks for the cookie written to the Customer 400's device as part of Register 100. In step 206 if no cookie is found the Customer 400 is taken to the service's main web-page where they are asked to log-in, using their email address and password, or Register 100. If the Customer 400 logs-in successfully the cookie is re-written to their device. If they register for the first time, a new cookie is written as described in Register 100. If the Customer 400 does not register or log-in they are taken back to the Etailer 700 site where they are able to specify a non-ACP delivery address.

At step 209 the Customer 400 will have a cookie on their device containing their Customer 400 ID. The executing program now looks up the Customer 400's account on the Application Server using this Customer 400 ID and finds their ACP Site 900 preferences, set-up as part of Register 100. In step 210 the Customer 400 is asked to select the ACP Site 900 for this delivery from his list of preferences. Once a site is chosen the Application Server then generates a Parcel ID unique to this particular delivery. If the Etailer 700 has specified bar-code extraction as part of Etailer 700 Registration 1600, then, at step 213, the tracking number, generated by delivery company software at the Etailer 700 site, is converted into a bar-code and added to the package label. Then the address field on the Etailer 700 site is completed with the ACP Site 900 address, Package ID and text identifying the package as bar-code enabled. At step 214, if the Etailer 700 cannot process bar-code encryption the Parcel ID is printed as a numeric string as part of the delivery address.

Once the delivery address is complete the Customer 400 completes the purchase transaction at step 215. Once the order is validated by the Etailer 700, a message is sent to the Application Server confirming that an order was placed for that Parcel ID and giving further details relating to that order: Etailer 700 ID, from Etailer 700 Registration 1600, the number of items in the order and the time and date of the order timestamp. The message is used by the Application Server to determine which Parcel IDs represent confirmed deliveries; if the Customer 400 selects an ACP Site 900 but then cancels the purchase transaction then a Parcel ID would be generated but not used.

If the Etailer 700 is not bar-code enabled this completes the Schedule Delivery process. The numeric Parcel ID is not downloaded to the CENTRAL CONSOLE and there is not exact validation of the Parcel ID when a delivery is made. Instead check-digit validation is used to provide rudimentary validation. However, for bar-coded deliveries the Etailer 700 must pass bar-code details back to the Application Server so that they can be passed on to the CENTRAL CONSOLE for validation on delivery. In steps 228 and 229 the Etailer 700 collates the bar-code with the Parcel ID, ACP address and ACP Site 900 ID for the order and then sends this to the Application Server in step 230. This process is completed every 30 minutes, with orders being batched together. In step 231 the Application Server then sends the bar-code and associated Parcel ID to the ACP server which then uses the site ID to identify the relevant ACP Site 900 and then download the bar-code and Parcel ID to the local CENTRAL CONSOLE. At this point the ACP Site 900 is ready to receive that delivery.

If the Etailer 700 is non-registered there will be no integration between their site and the Central Servers 1000. As a result the selection of the appropriate ACP Site 900 together with the generation of the Parcel ID is done independently from the Etailer 700 web-site. In step 217 the Customer 400 goes to the service's home-page on the world wide web and clicks on the 'use service' button. In step 218 the Customer 400's device is searched for the cookie written as part of the Register 100 process. If a cookie is found the Customer 400 goes directly to step 221. Otherwise, if no cookie is found, the Customer 400 is asked to either Register 100 or log-on using their email address and password. If the Customer 400 logs-on the cookie is re-written to their device as part of step 219. If the Customer 400 completes the Register 100 process a new cookie is written to their device.

In step 221 the Application Server looks up the Customer 400's ACP Site 900 preferences using their Customer 400 ID retrieved from the cookie. In step 222 the Customer 400 selects the ACP Site 900 preferred for this delivery and then in step 223 the Application Server generates a Parcel ID unique to that delivery. In steps 224 and 225 the Customer 400 copies the ACP Site 900 address and the Parcel ID into the address fields of the Etailer 700 's delivery page and completes the purchase transaction.

### Deliver Goods 300

Once goods have been ordered they are dispatched to the ACP Site 900 ready for collection by the Customer 400. FIG. 10 describes this process.

After the Customer 400 has completed the purchase transaction the Etailer 700 packages the goods and labels with the ACP Site 900 address and Parcel ID. Using their own, or a third party, delivery company the goods are then dispatched to the ACP Site 900 in step 302.

When at the ACP with the package the deliverer approaches the screen of the CENTRAL CONSOLE where he is first asked to identify himself in step 304. If, as part of Delivery Company Registration 1400, his company has elected to use bar-code identification the deliverer can present his membership card to the bar-code reader; otherwise he enters his Delivery Company ID using the numeric keypad. In step 305 the CENTRAL CONSOLE validates the Delivery Company ID against its locally held database of valid codes. If the code is valid the CENTRAL CONSOLE proceeds to step 308 and displays the Delivery Main Menu, otherwise the delivery is refused in step 307 and the CENTRAL CONSOLE prompts the deliverer to enter a valid code.

At step 308 the deliverer is presented with four options: 'delivery', 'expiry', 'close doors' and 'exit'. To make a delivery he selects 'delivery' and the CENTRAL CONSOLE then prompts him to either enter the Parcel ID for the package or present the bar-code for scanning. If the package address contains text telling the deliverer that the package is bar-code enabled he will then present the package to the bar-code reader of the CENTRAL CONSOLE in step 315. If the package is not bar-code enabled, or the bar-code reader is unable to read the bar-code the deliverer is prompted, in step 311, to enter the Parcel ID using the keypad. At step 317, if the Parcel ID entered is invalid the CENTRAL CONSOLE informs the deliverer and re-displays the Delivery Main Menu.

Once a valid bar-code or Parcel ID is entered the CENTRAL CONSOLE opens the smallest available locker and prompts the deliverer to place the goods inside. In step 320 the CENTRAL CONSOLE checks to see if the door to the locker has been closed. If it has the CENTRAL CONSOLE automatically locks the door and asks the deliverer if the delivery was successful in step 326. If the locker door is still open and more than 30 seconds have elapsed since the door was opened the CENTRAL CONSOLE beeps and the screen flashes for 10 seconds, prompting the deliverer to close the door. If the door is still open at the end of this 10 seconds the CENTRAL CONSOLE sends an urgent, failed delivery message to the Application Server, via the LSM, and logs the deliverer out of the system.

At step 326 if the deliverer confirms that the delivery was successful the CENTRAL CONSOLE returns to the delivery main menu. If the deliverer presses the 'no' key the CENTRAL CONSOLE asks if the door was shut by mistake. If it was then the CENTRAL CONSOLE re-opens the door in step 328. If the door was not shut in error the CENTRAL CONSOLE asks if the locker is dirty or damaged in steps 343 and 345. If it is the CENTRAL CONSOLE sends an appropriate message to the LSM which forwards it on to the Application Server. The CENTRAL CONSOLE then looks for another appropriately sized locker in step 352. If it finds an available locker it opens the door and prompts the deliverer to put the goods inside. If no locker is available the delivery is refused, a message informs the deliverer that there is no space and a message is sent to the Application Server, via the LSM.

If the locker is clean and undamaged the CENTRAL CONSOLE asks the deliverer if the locker is too small for the package. If it is the CENTRAL CONSOLE looks for an available locker of the next size up. If the next size up is available it opens the locker door and asks the deliverer to put the package inside. If the maximum size has been reached and the package has still not been delivered, because it is too big or because there is no availability, the delivery is refused and a message is sent to the Application Server via the LSM. Once a delivery has been successfully made the delivery main menu is displayed by the CENTRAL CONSOLE and the deliverer is free to continue with any other deliveries for that site or log-out.

To complete the delivery process the CENTRAL CONSOLE must inform the Application Server that a delivery has been made so that the Customer 400 can be contacted. If the package was processed with a bar-code the Parcel ID has not been entered and therefore it retrieved from the Application Server in step 332. If an associated Parcel ID is not found the LSM logs the delivery as incomplete and an error message is sent to the Application Server. Once the Parcel ID is present the CENTRAL CONSOLE invokes an asynchronous process, in step 334, to generate a Collection Code and send it to the Customer 400.

At steps 336 and 337 the CENTRAL CONSOLE generates the Collection Code and sends it, via the LSM, together with the Delivery Company ID and the Parcel ID to the Application Server, which then uses the Parcel ID to determine which Customer 400 this package is for. In step 339 the Application Server sends the Collection Code to the Customer 400, using their preferred channel as set-up in Register 100, together with a message informing them that their goods have arrived and reminding them where and how to collect them. The delivery company is referenced using the Delivery Company ID and a message is sent informing them that the package has arrived.

At step 341 and 342 the Application Server sends the CENTRAL CONSOLE, via the LSM, the Customer 400's PIN together with the Parcel ID. At this point the CENTRAL CONSOLE is ready for the Customer 400 to collect their goods.

### Collect Goods 400

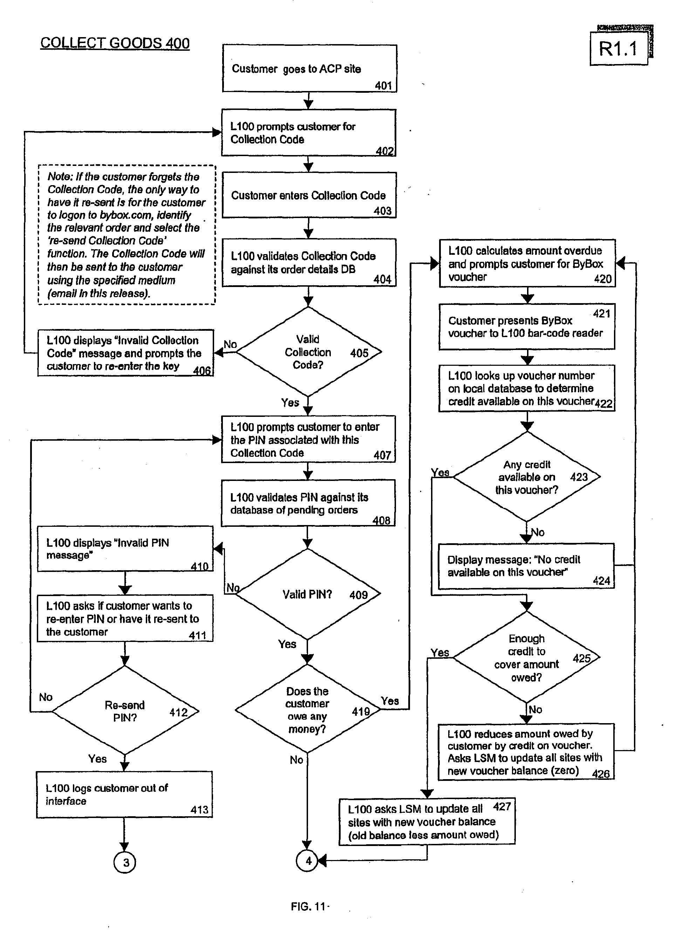

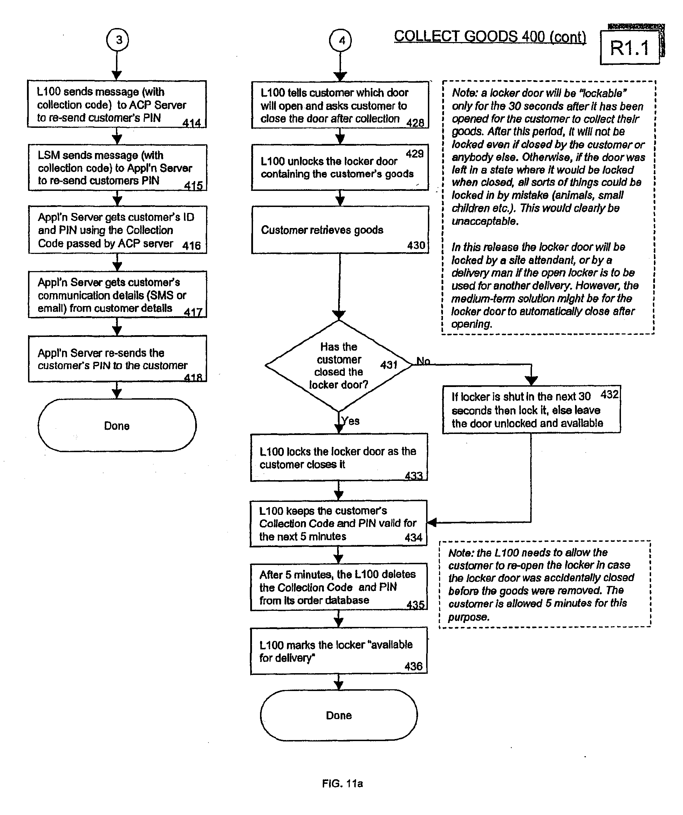

FIG. 11 describes how the Customer 400 retrieves his goods from the locker. Once the Customer 400 has received the message with the Collection Code he is free to retrieve his goods at his own convenience. When he approaches the ACP Site 900, the CENTRAL CONSOLE prompts him for his Collection Code in step 402. Once the Collection Code is entered the CENTRAL CONSOLE validates it against its orders database in step 404. If the code is invalid an error message is displayed and the Customer 400 is prompted to re-enter the code. If a valid code is entered the CENTRAL CONSOLE then asks the Customer 400 to enter their PIN, in step 407, and validates the entry in step 408. If an invalid PIN is entered the CENTRAL CONSOLE displays an error message and asks the Customer 400 if they want to re-enter the PIN or if they need the PIN re-issued. If they want to re-enter, the CENTRAL CONSOLE re-displays the PIN entry screen at step 407. If the Customer 400 requests a re-issue of the PIN they are informed that they cannot collect their goods at that time and that their PIN will be re-sent immediately. In steps 414 and 415 the CENTRAL CONSOLE sends the Collection Code back to the Application Server, via the LSM, and asks the Application Server to re-issue the Customer 400's PIN. Using the Collection Code, the Application Server looks up the Customer 400's details and re-issues the PIN using the Customer 400's preferred delivery channel in steps 417 and 418.

If a valid PIN is entered in step 409 the CENTRAL CONSOLE checks if the Customer 400 owes any money for rental of the locker. Depending on the business model implemented the Customer 400 may pay for storage in part or completely. If money is owed the CENTRAL CONSOLE proceeds in step 420 to calculate the amount due based on an algorithm stored locally. In this embodiment payment can only be made using a prepaid card bought with cash from the retail Host 1100. In future embodiments payment will be possible using credit and debit cards.

Once the CENTRAL CONSOLE has displayed the amount due the Customer 400 makes payment, in step 421, by presenting his prepaid card to the bar-code reader. The CENTRAL CONSOLE reads the bar-code and looks up the amount available for that card on its local database. In step 423, the CENTRAL CONSOLE determines if there is sufficient credit available. If so the CENTRAL CONSOLE asks the LSM to update the new card balance on all other sites and proceeds in steps 428 and 429 to open the door to the locker containing the Customer 400's goods. If there is insufficient credit the CENTRAL CONSOLE reduces the balance on the card to zero, communicates this new balance to all other sites via the CENTRAL CONSOLE and informs the Customer 400 that they must charge their card with more money before they can retrieve their goods.

At step 429 the appropriate locker door is opened and the Customer 400 retrieves their goods in step 430. At step 431 the CENTRAL CONSOLE checks to see if the Customer 400 has closed the locker door. If he has the CENTRAL CONSOLE immediately locks it in step 433. The Customer 400's Collection Code for that package is kept active on the CENTRAL CONSOLE database for a further 5 minutes in case the Customer 400 has shut the door in error. This may happen for a variety of reasons: for example the Customer 400 may be distracted before collecting their goods and inadvertently close the door. Once 5 minutes has elapsed the Customer 400 Code and PIN combination is deleted from the CENTRAL CONSOLE's order database and the CENTRAL CONSOLE marks the locker as available for delivery. If the locker door is not shut 30 seconds after it is opened it remains open until the next delivery is made.

### Collection Expiry 500

The Customer 400 is given a fixed period to collect their goods once they have been delivered to an ACP Site 900. This period comprises a free collection time and a chargeable extension. If when this combined period has ended the goods have not been retrieved they are sent back to the Etailer 700. FIG. 12 describes this collection expiry process.

As part of its daily processing routine, the Application Server identifies all deliveries that are within 24 hours of the end of the free collection time and sends each Customer 400 a message, via their preferred communication channel, warning them that they will be liable to a charge if their goods are not collected within the next day. At step 503 the Application Server checks to see, for each delivery identified in step 502, if the Customer 400 has retrieved the goods. If they haven't the LSM marks the order as overdue and applies a fee every day for the remainder of the chargeable extension period or until the Customer 400 collects their goods, whichever is the sooner. If the Customer 400 collects their goods before the end of the chargeable extension period they must pay the overdue amount before the appropriate locker door is opened, as described in Collect Goods 400.

When the chargeable extension ends the CENTRAL CONSOLE marks the Parcel ID of that package as expired on its orders database and send a message to the Application Server via the LSM. In step 509 the Application Server looks up the Customer 400's account based on the Parcel ID and sends a message to the Customer 400, via their preferred channel, telling them that their order has expired and will be sent back to the Etailer 700. As part of its daily processing routine the Application Server produces a list of all expired Parcel IDs by ACP Site 900 and sends notification to the relevant delivery companies that return collections are required.

In step 512 the deliverer approaches the CENTRAL CONSOLE at the ACP Site 900 containing and expired order and logs-on to the CENTRAL CONSOLE in the normal way, as described in Deliver Goods 300. From the delivery main menu, the deliverer selects 'expiry'. At step 514 the CENTRAL CONSOLE prompts the deliverer to enter the Parcel ID of the first expired order to be collected. In steps 515 and 516 this code is entered by the deliverer and validated by the CENTRAL CONSOLE against its order database containing expired orders. If the code is invalid the deliverer is asked to re-enter the code or log-out of the system. If a valid code is entered the CENTRAL CONSOLE opens the appropriate locker door in step 520 and the deliverer retrieves the expired order from the locker in step 521.

At step 522 the CENTRAL CONSOLE checks if the locker door has been closed. If it has the door is immediately locked and a timer set. The Parcel ID for that expired order is kept valid for a further 5 minutes in case the deliverer has made a mistake and has left the goods in the locker. At the end of this period the CENTRAL CONSOLE deletes the Parcel ID from its orders database and marks the locker as available for delivery in step 527. If, at step 522, the deliverer has not shut the door and fails to do so within 30 seconds of the door being opened, the door is left unlocked and available.

### Partner Settlement 600

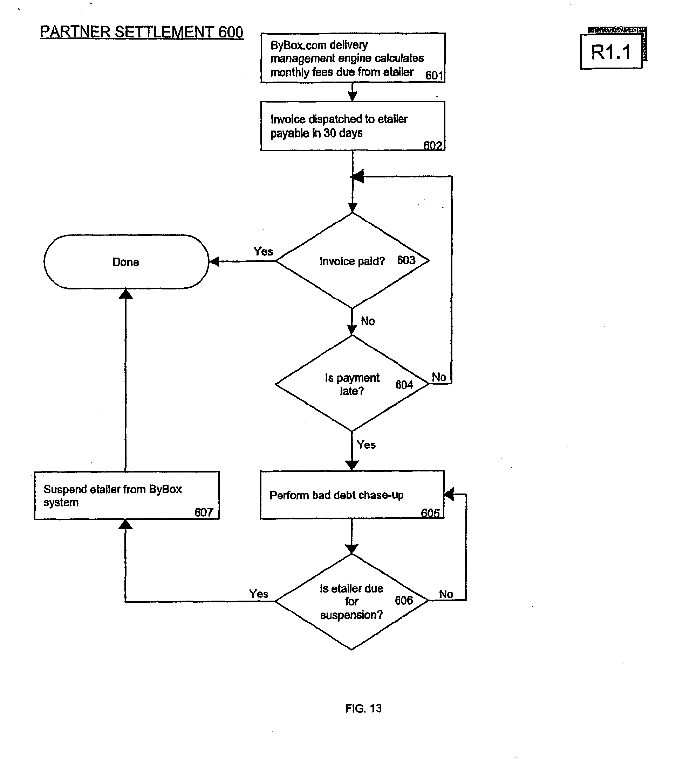

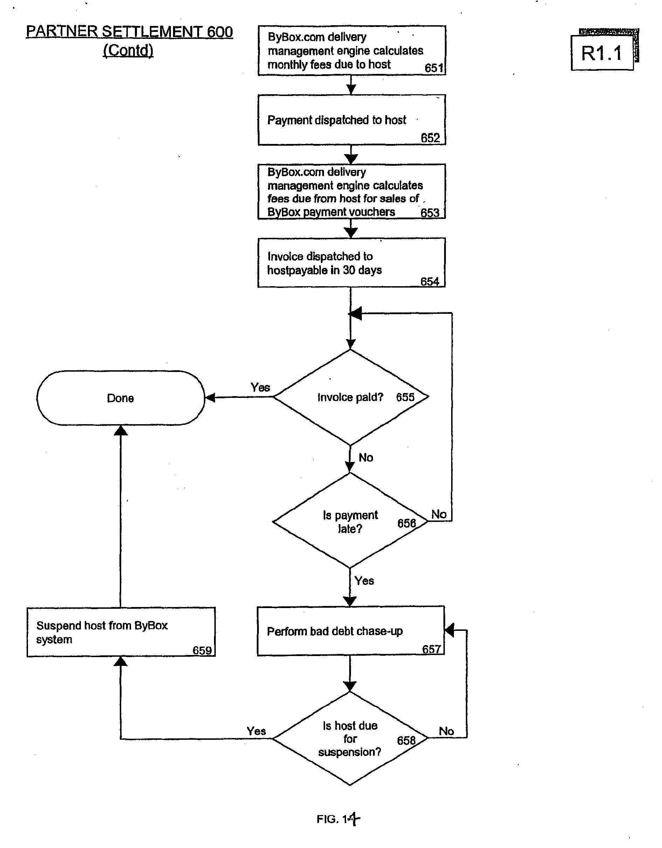

The method and apparatus of the present invention introduces efficiencies into the system for residential deliveries. These efficiencies are made possible through the integration of the present invention with order systems of Etailers 700 and the use of retail space of ACP Hosts 1100. FIG. 13 and FIG.14 describe the process of settlement between these commercial partners. FIG. 13 describes this process for Etailers 700; FIG. 14 describes this process for ACP Site 900 Hosts 1100.

At the end of every calendar month the Application Server analyses all deliveries made to an ACP Site 900 by Customers 400 of registered Etailers 700. A charge is calculated, for each Etailer 700, based on this analysis and an invoice dispatched, in step 602, payable in 30 days. At step 603 the Application Server checks if the invoice has been paid. If it hasn't the payment is classified as late and in step 605 the Etailer 700 is contacted to chase-up the debt. Depending on the response in step 606, the Etailer 700 is either suspended from the system or further chase-up is requested.

At the end of every calendar month the Application Server analyses all deliveries made to every ACP Site 900 of a Host 1100 partner. A charge is calculated, for each ACP Host 1100, based on this analysis and an invoice dispatched, in step 654, payable in 30 days. At step 655 the Application Server checks if the invoice has been paid. If it hasn't the payment is classified as late and in step 657 the ACP Host 1100 is contacted to chase-up the debt. Depending on the response in step 658, the ACP Host 1100 is either suspended from the system or further chase-up is requested.

### Close Doors 1300

As part of both the Deliver 300 and Collect Goods 400 processes there are occasions when the locker doors will be left open as part of normal business. This is untidy and leaves the lockers liable to be damaged or dirtied. To mitigate this risk the deliverer will attempt to close any open doors when he visits the site to make a delivery or collection.

In step 1301 the deliverer logs-on to the CENTRAL CONSOLE in the normal way, as described in Deliver Goods 300. From the delivery main menu, the deliverer selects 'close doors'. At step 1303 the CENTRAL CONSOLE asks for the number of the doors which need to be closed and locked. The deliverer enters the door numbers in step 1304 and in step 1305 the CENTRAL CONSOLE sets each door to lockable mode and prompts the deliverer to close the selected door. As soon as each door is closed the CENTRAL CONSOLE locks it.

### Delivery Company Registration 1400

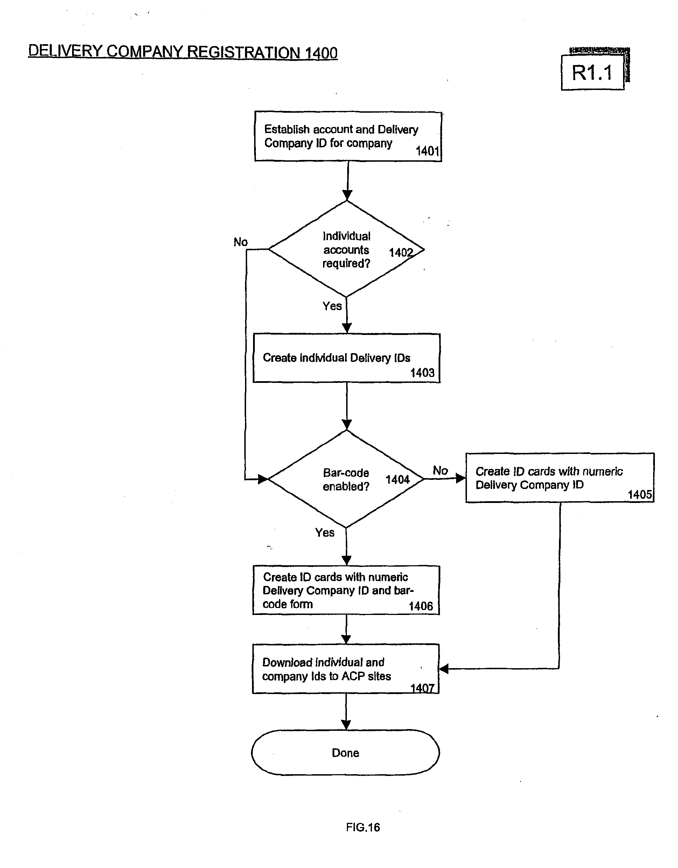

Validation of delivery men is an essential requirement of both the Deliver Goods 300 and Collection Expiry 500 processes. To enable validation delivery companies must first register with the service. This process is described in FIG. 16.

At step 1401 a new delivery company account is established on the application server and a unique Delivery Company ID is generated. If the delivery company requires individual accounts to be established for each of their delivery men this is completed in step 1403. Similarly if delivery companies want to integrate the Delivery Company ID into their systems via bar-code reading this is done in step 1406.

Once a new delivery company has been added the new Delivery Company IDs it downloaded to the CENTRAL CONSOLE at each ACP Site 900.

### ACP Host Registration 1500

To facilitate Partner Settlement 600 and to uniquely identify each ACP Site 900 it is important to establish an account for each ACP Host 1100. Steps 1501 and 1502 complete this process by establishing a unique account number on the application server for each Host 1100 together with unique IDs for each ACP Site 900. Once these IDs have been generated they are downloaded to the CENTRAL CONSOLE at each ACP Site 900 in 1503.

### Etailer 700 Registration 1600

To facilitate Partner Settlement 600 and Collection Expiry 500 the application server is able to identify each separate Etailer 700. At step 1601 an account is established for each new Etailer 700 and a unique ID is generated. If the Etailer 700 is able to provide bar-coded labels this is recorded in the application server at step 1603.

### I. Alternative Embodiments

In an alternative embodiments of the invention, a centralized, synchronous system is used to validate delivery codes for packages delivered to an ACP. In one such embodiment, a package delivered to the ACP is validated by its packet ID, such that the packet ID is sent to the central server for validation. Once the packet ID is validated at the central server, a command to open an appropriate door on the ACP may be sent from the central server to the central console on the ACP.

In embodiments of the invention, a package may be validated by insertion of a delivery company ID to the console. In particular, an ID for the delivery agent which brings the package to the ACP may be used to validate delivery of the package. In some such embodiments, the delivery ID may be sent to the central server for validation. In other embodiments, the delivery ID may be validated asynchronously. In some such embodiments, delivery ID s for each of a plurality of delivery companies may be downloaded to local memory on the ACP console at periodic intervals. In some embodiments, the delivery ID s may be downloaded en masse after a triggering event, such as an opening or closing of a locker door.

In some embodiments, the console does not include a keyboard. In some such embodiments, validation of the package ID may be conducted through wireless interfaces such as a bar code scanner or a wireless transmitter/receiver.

In embodiments of the invention, after delivery of a package to an ACP, a confirmation of delivery may be sent from the ACP to an interface device. In some embodiments, this confirmation may take the form of a digital signature. The digital signature may identify one or more of the following: location of the ACP, time of delivery, package ID, user ID, delivery company ID.

### J. Conclusion

The foregoing description of various embodiments of the invention has been presented for purposes of illustration and description. It is not intended to limit the invention to the precise forms disclosed. Many modifications and equivalent arrangements will be apparent.

### FURTHER EMBODIMENTS

1. A method of operating an enclosure by use of a remote computing system, wherein the enclosure is located at a customer residence and the enclosure is coupled to a local microcontroller, the local microcontroller in communication with the remote computing system via a network connection, the method comprising:
   receiving a tracking number at the remote computing system, the tracking number corresponding to a package to be delivered to the enclosure;
   in response to receiving the tracking number, downloading the tracking number from the remote computing system to the microcontroller via the network connection;
   saving the tracking number in a local memory in the microcontroller;
   reading a code on the or associated with the package at a reader coupled to the controller.
   transforming the code to a checksum;
   comparing the checksum to the tracking number in the local memory;
   if the checksum matches the tracking number, opening a lock on the enclosure for delivery of the package, the lock operably coupled to the controller.
2. The method of embodiment 1, wherein the network connection is an internetwork connection.
3. The method of embodiment 2, wherein the internetwork connection employs a VSAT medium.
4. The method of embodiment 1, further comprising:
   after opening the lock, sending an electronic delivery confirmation message from the transponder to a handheld device in the vicinity of the enclosure, the handheld device operated by a party which has delivered the package to the enclosure.
5. The method of embodiment 1, wherein the enclosure includes a printer coupled to the microcontroller.
6. The method of embodiment 5, further comprising:
   after opening the lock, sending a confirmation message from the microcontroller to the printer.
7. The method of embodiment 1, further comprising:
   after opening the lock, sending a confirmation message to a host computer for a delivery company from the remote computing system via the internet, the confirmation message encoded as an e-mail message.
8. A method of operating an enclosure by use of a remote computing system, the remote computing system operably coupled to the enclosure via a network connection, wherein entry to the enclosure is controlled by an automated lock, the method comprising:
   receiving a first tracking number at a portable handheld device, the first tracking number corresponding to a package to be delivered to the enclosure;
   receiving the first tracking number wirelessly from a transponder resident on the handheld device to a receiver coupled to the enclosure;
   in response to receiving the first tracking number, sending the first tracking number to the remote computing system via the network;
   comparing the first tracking number to a checksum stored at the remote computing site;
   in response to comparing the first tracking number, sending an activation command to the enclosure from the remote computing site via the network connection;
   in response to the activation command, opening the automated lock for deposit of the package.
9. The method of embodiment 8, wherein the receiving the first tracking number further includes wirelessly receiving the first tracking number in the portable handheld device.
10. The method of embodiment 9, further comprising:
   after opening the automated lock, wirelessly sending a confirmation message indicating delivery of the package from the transponder on the enclosure to the portable handheld device.
11. The method of embodiment 10, wherein the transponder on the enclosure operates over radio frequencies.
12. The method of embodiment 11, wherein the confirmation message is encrypted.
13. A method of operating an enclosure by use of a remote computing system, the enclosure secured by an automated lock operably coupled to a local microcontroller, the remote computing system in communication with the microcontroller via a network connection, wherein the enclosure includes a bar code scanner operably coupled to the microcontroller, the method comprising:
   scanning a bar code printed on a label affixed to, or associated with, a package to the bar code scanner;
   communicating the bar code from the scanner to the microcontroller;
   receiving the barcode at the remote computing system from the microcontroller via the network;
   in response to receiving the barcode, comparing the barcode at the remote computing system to a tracking number for the package;
   in response to comparing the barcode, sending an activation command from the computing system to the microcontroller via the network;
   opening the lock in response to the command for delivery of the package.
14. The method of embodiment 13, further comprising:
   in response to the activation command, opening the lock by use of the microcontroller for delivery of the package.
15. The method of embodiment 14, further comprising:
   after opening the lock, printing a confirmation of delivery on a printer affixed to the enclosure.
16. A method of operating a storage device for the delivery and pick-up of goods, the storage device including an automated lock operably coupled to a local microcontroller fixed to the storage device, the microcontroller in communication with a remote computing system via a wide area network, the method comprising:
   sending a request from the microcontroller to the remote computing system to receive a plurality of codes, each of the plurality of codes identifying a different company from a plurality of delivery companies;
   in response to the request, downloading the plurality of codes from the remote computing system to a microcontroller from a remote computing system;
   receiving a delivery company code at an input device locally coupled to the storage device;
   searching for the delivery company code against the plurality of codes in the microcontroller;
   if the searching for the delivery company code is successful, opening the automated lock by use of the microcontroller.
17. The method of embodiment 16, wherein the plurality of code includes at least four codes.
18. The method of embodiment 16 , wherein the plurality of codes includes at least eight codes.
19. A storage device for the delivery and pick-up of goods, the storage device comprising:
   a plurality of enclosures for receiving and securing the goods, the plurality of enclosures being located at a centralized drop-off site, each of an enclosure including a locking mechanism and an input device for unlocking the enclosure coupled to a plurality of enclosures;
   a host system including a server, a database and a memory in communication with the plurality of enclosures, the host system being located remotely from the plurality of enclosures, the host system providing an activation to unlock each enclosure when a product code unique to a purchased product is matched with an identifier code located on, or associated with, the purchased product.
20. The device of embodiment 19, wherein the host system generates a opening code transmitted to a customer, wherein the customer unlocks the enclosure by enter the opening code at the enclosure.
21. The device of embodiment 19, wherein the memory stores delivery company identifiers for delivery companies.
22. A storage device for the delivery and pick-up of goods, the storage device comprising:
   a plurality of enclosures for receiving and securing the goods, at least a portion of the enclosures being located at different drop-off sites, each of an enclosure including a locking mechanism and input device for unlocking the enclosure;
   a host system including a server, a database and a memory in communication with the plurality of enclosures, the host system being located remotely from the plurality of enclosures, the host system providing an activation to lock each enclosure when a product code unique to a purchased product is matched with an identifier code located on, or associated with, the purchased product
   wherein at least a first portion of the plurality of enclosures are located at home locations of customers.
23. The device of embodiment 22, wherein at least a second portion of the plurality of enclosures are located remotely from the home locations of customers.
24. A storage device for the delivery and pick-up of goods, the storage device comprising:
   a plurality of enclosures for receiving and securing the goods, at least a portion of the enclosures being located at different drop-off sites, each of an enclosure including a locking mechanism and input device for unlocking the enclosure;
   a host system including a server, a database and a memory in communication with the plurality of enclosures, the host system being located remotely from the plurality of enclosures, the host system providing an activation to unlock each enclosure when a product code unique to a purchased product is matched with an identifier code located on, or associated with, the purchased product.
25. A storage device for the delivery and pick-up of goods, the storage device comprising:
   a plurality of enclosures for receiving and securing the goods, at least a portion of the enclosures being located at different drop-off sites, each of an enclosure including a locking mechanism, an input device for locking or unlocking the enclosure and an enclosure memory;
   a host system including a server, a database and a memory in communication with the plurality of enclosures, the host system being located remotely from the plurality of enclosures, the host system providing an activation to unlock or lock each enclosure when
   a product code associated with a purchased product is matched with an identifier code located on, or associated with, the purchased product, wherein the host system downloads a product code to the enclosure memory to unlock or lock the enclosure.
26. The device of embodiment 25, wherein the host system downloads the product code to the enclosure memory prior to delivery a product to an enclosure by a delivery company.
27. A storage device for the delivery and pick-up of goods, the storage device comprising:
   a plurality of enclosures for receiving and securing the goods, at least a portion of the enclosures being located at different customer dwelling sites, each of an enclosure including a locking mechanism, an input device for unlocking or unlocking the enclosure and an enclosure memory;
   a host system including a server, a database and a memory in communication with the plurality of enclosures, the host system being located remotely from the plurality of enclosures, the host system providing an activation to unlock or lock each enclosure when a delivery company identifier of a delivery company is matched with an identifier code of the delivery company at the customer dwelling site.
28. The device of embodiment 27, wherein the host system downloads the delivery company identifier of the delivery company to the enclosure memory.
29. A storage device for the delivery and pick-up of goods, the storage device comprising:
   a plurality of enclosures for receiving and securing the goods, at least a portion of the enclosures being located at different customer dwelling sites, each of an enclosure including a locking mechanism, an input device for unlocking or unlocking the enclosure and an enclosure memory;
   a host system including a server, a database and a memory in communication with the plurality of enclosures, the host system being located remotely from the plurality of enclosures, the host system providing an activation to unlock or lock each enclosure when one of when a product code associated with a purchased product is matched with an identifier code located on, or associated with, the purchased product, wherein the host system downloads a product code or a delivery company identifier of a delivery company to the enclosure memory to unlock or lock the enclosure and is matched with an identifier code of the delivery company or a product code unique to a purchased product at the customer dwelling site.
30. A product delivery system, comprising:
   a host system including at least one host system server with a host system memory;
   a customer interface coupled to the host system;
   wherein the host system provides a delivery company identifier to a customer that authenticates a delivery company as authorized to deliver products to a customer pick up site.
31. The system of embodiment 30, wherein the host system further provides a verification of product delivery to the customer pick up site.
32. The system of embodiment 31, wherein the verification of product delivery to the customer pick up site is received by the delivery company.
33. A method of determining a delivery address for a purchase product, comprising:
   providing a host system coupled to one or more retail site system, the host system including a database with a plurality of delivery addresses;
   inputting a requested delivery address for a purchaser by the retail site;
   determining at least one collection point for the requested delivery address by the host system;
   calculating a delivery fee for each collection point by the host system.
34. The method of embodiment 33, further comprising:
   sending the purchaser a list of collection points and fees for each collection point.
35. The method of embodiment 34, further comprising:
   completing a purchase transaction for the product with the seller and designating a selected delivery site and price received from the host system.
36. The method of embodiment 33, further comprising:
   locating the purchased item by the seller, and generating a tracking identifier for the purchased item by the host system.
37. The method of embodiment 33, further comprising:
   marking the purchased item with a bar coded tracking identifier and the address of the collection point.
38. The method of embodiment 33, further comprising:
   forwarding the tracking identifier to the designated collection point in preparation of delivery of the purchased item.
39. The method of embodiment 38, wherein the host system database includes a list of customers, a list of collection points, a list of shipping rates and a list of pending deliveries to the collection points.
40. The method of embodiment 39, wherein the host system database further includes an ability to dynamically delivery charges and fees, an ability to provide delivery discounts based on multiple deliveries to the same collection point at the same time, an ability to pro-rata the discount based on the number of deliveries.
41. The method of embodiment 40, wherein the delivery fee is determined by one of a flat fixed fee, a flat dynamic fee, a fee which includes a flat consolidation discount, and a prorata consolidation discount based on the number of deliveries to the collection site.
42. A method of determining a delivery address for a purchase product, comprising:
   providing a host system coupled to one or more retail site systems, the host system including a database with a plurality of delivery addresses;
   inputting a requested delivery address for a purchaser by the retail site;;
   determining at least one collection point for the requested delivery address by the host system;
   calculating a delivery fee for each collection point by the host system;
   wherein the host system includes a list of couriers.
43. The method of embodiment 42, further comprising:
   sending the purchaser a list of collection points and fees for each collection point.
44. The method of embodiment 42, further comprising:
   completing a purchase transaction for the product with the seller and designating a selected delivery site and price received from the host system.
45. The method of embodiment 42, wherein the host system database includes, a list of customers, a list of collection points, a list of shipping rates and a list of pending deliveries to the collection points.
46. The method of embodiment 45, wherein the host system database further includes an ability to dynamically delivery charges and fees, an ability to provide delivery discounts based on multiple deliveries to the same collection point at the same time, an ability to prorata the discount based on the number of deliveries.
47. The method of embodiment 46, wherein the delivery fee is determined by one of a flat fixed fee, a flat dynamic fee, a fee which includes a flat consolidation discount, and a prorata consolidation discount based on the number of deliveries to the collection site.
48. The method of any preceding embodiment, wherein the input device is physically associated with the storage device and is one of a keyboard, a smart card reader, a radio receiver, an infrared scanner, a laser based scanner, an infra-red reader, an RF tag reader , or a blue tooth reader.

## Claims

1. A method of operating a network of automated collection points (ACPs) by use of a remote computing system,
each ACP comprising:
a plurality of lockers,
a local microcontroller,
and a local user interface;
the microcontroller being in communication with the remote computing system via a connection,
each of the lockers having a lock operably coupled to the microcontroller for locking and unlocking the locker;
the method comprising:
providing to the remote computing system an order to deliver a package to one customer of a plurality of customers;
optionally, including in the order a tracking number of the package;
selecting an ACP from the network of ACPs to receive the package;
generating a package ID and assigning the package ID to the package;
entering at least one of the package ID and the tracking number into the interface of the selected ACP;
in response to receiving the at least one of the package ID and the tracking number at the interface, unlocking a locker of the ACP to receive the package; and
placing the package in the locker and re-locking the locker.

2. The method of claim 1, wherein the central computer system communicates asynchronously with the network, and the microcontroller is arranged to unlock the locker to receive the package during an interruption in communication between the microcontroller and the remote computing system in response to receiving the at least one of the package ID and the tracking number at the interface.

3. The method of claim 2, wherein the remote computing system is arranged to re-populate the contents of a memory of the microcontroller in the event that the microcontroller is re-booted.

4. The method of any of claims 1 - 3, wherein the package is purchased by the customer from a vendor via a website of the vendor; a link to the remote computing system is provided on the website; the order is initiated by the customer using the link; and the order is sent from the vendor to the remote computing system.

5. The method of claim 4, wherein the order includes the said tracking number, and the tracking number is generated by delivery company software at the website of the vendor.

6. The method of any of claims 1 - 3, wherein the package is purchased by the customer from a vendor via a website of the vendor; the customer provides the order to the remote computing system via a website of the remote computing system; the remote computing system generates the package ID and provides the package ID and address details of the selected ACP to the customer; and the customer provides the package ID and address details to the vendor via the website of the vendor.

7. The method of any of claims 1 - 6, wherein the interface includes a barcode reader, and the at least one of the package ID and the tracking number is encoded as a barcode and entered into the interface by scanning it with the barcode reader.

8. The method of any of claims 1 - 6, wherein the interface includes a detector, and the package ID may be transmitted wirelessly to the detector.

9. The method of any of claims 1 - 8, wherein the package ID is entered into the interface of the selected ACP but there is not exact validation of the package ID when a delivery is made.

10. The method of any of claims 1 - 8, wherein the package ID is downloaded from the remote computing system to the selected ACP, the package ID is entered into the interface of the selected ACP, and the locker is unlocked to receive the package in response to at least the validation of the package ID entered into the interface.

11. The method of any of claims 1 - 8, wherein the order includes the said tracking number, the tracking number is downloaded from the remote computing system to the selected ACP, the tracking number is entered into the interface of the selected ACP, and the locker is unlocked to receive the package in response to at least the validation of the tracking number entered into the interface.

12. The method of any of claims 1 - 8, wherein the locker is unlocked to receive the package in response to receiving at the interface, both the at least one of the package ID and the tracking number, and an identification of a person delivering the package.

13. The method of any preceding claim, including the step of registering the plurality of customers and storing contact details of each of the customers in a memory of the remote computing system;
and, after placing the package in the locker and re-locking the locker, generating a collection code for opening the locker containing the package;
retrieving the contact details of the customer from the memory and sending the collection code to the customer;
entering at least the collection code into the interface of the selected ACP;
and, in response to receiving at least the collection code at the interface, unlocking the locker to allow removal of the package.

14. The method of claim 13, wherein the locker is unlocked to allow removal of the package in response to both receiving a payment from the customer and receiving at the interface at least the collection code.

15. The method of claim 13 or claim 14, wherein after the locker is unlocked to allow removal of the package, if the customer closes the locker within a defined time period, the locker is re-locked immediately; but if not, then the locker is not re-locked until the next delivery is made.
